Europäisches Patentamt

European Patent Office

Office européen des brevets

(11) Publication number:

**0 066 011**

**B1**

# EUROPEAN PATENT SPECIFICATION

(45) Date of publication of patent specification: **10.04.85**

(21) Application number: **81200582.5**

(22) Date of filing: **29.05.81**

(51) Int. Cl.⁴: **H 04 Q 5/24**

(54) Telecommunication system.

(43) Date of publication of application:
**08.12.82 Bulletin 82/49**

(45) Publication of the grant of the patent:
**10.04.85 Bulletin 85/15**

(84) Designated Contracting States:
**DE FR GB IT NL**

(56) References cited:
NATIONAL TELECOMMUNICATIONS
CONFERENCE, vol. 4, of 4 30th November - 4th
December 1980, Houston (USA);

Communications International, May 1977,
pages 29-30

(73) Proprietor: BELL TELEPHONE
MANUFACTURING COMPANY Naamloze
Vennootschap
Francis Wellesplein 1
B-2000 Antwerp (BE)

(84) NL

(73) Proprietor: International Standard Electric
Corporation
320 Park Avenue
New York New York 10022 (US)

㊴ DE FR GB IT

(72) Inventor: Danneels, Johan Maurits Raphael
Nieuwstraat 101
B-2628 Rupelmonde (BE)
Inventor: Taverniers, Michel Dominique R. M.
René Karelstraat 57
B-2200 Borgerhout (BE)
Inventor: Wouters, Joannes Clementinus A. M.
Struikenlei 12
B-2120 Schoten (BE)

(74) Representative: Vermeersch, Robert et al
BELL TELEPHONE MANUFACTURING
COMPANY Naamloze Vennootschap Patent
Department Francis Wellesplein 1
B-2000 Antwerp (BE)

Courier Press, Leamington Spa, England.

## Description

The present invention relates to a telecommunication system including a telecommunication exchange coupled to each of a plurality of subscriber stations via the cascade connection of an exchange terminal unit, a transmission link and a subscriber terminal unit, each of said units including a transmitter circuit and a receiver circuit enabling the units to communicate by modulation and demodulation of a carrier wave, parts of said transmitter and receiver circuits of each of said units being realized as an integrated semiconductor circuit and the integrated parts of said units being identical.

Such a system is already known from the article "Subscriber subcarrier system — a new life" by R. JELSKI, published in "Communications International", May 1977, pp. 29—30. In this known system the integrated receiver and transmitter parts are integrated on different chips mounted in 18-terminal and 16-terminal packages respectively. Moreover, the system consumes relatively much power in the quiescent state because the receiver circuits in both the exchange and subscriber terminal units are always operational. This is particularly disadvantageous in the subscriber terminal unit, when the latter is fed from a local battery.

An object of the present invention is to provide a telecommunication system of the above type but which is particularly economical and has a reduced power consumption.

According to the invention this object is achieved due to the fact that said transmitter and receiver integrated parts of each of said units are integrated on a same chip, said receiver integrated part including a continuously enabled carrier recovery device having an input constituting the receiver input and an output which in said subscriber terminal unit is coupled to a carrier wave detector located outside said chip and enabling the operation of said receiver integrated part, except said carrier recovery circuit thereof, only when a carrier wave is being detected by said detector.

Because both the integrated receiver and transmitter parts are on a same chip the system can be made less expensive as such a single chip requires less terminals than the total number of terminals of the two known separate receiver and transmitter chips, for instance but not only due to the fact that only two voltage supply terminals are necessitated and no interconnections between receiver and transmitter terminals exist. Moreover, the system power consumption in the quiescent state is reduced due to the fact that most of the receiver circuit is then not operational.

The above mentioned and other objects and features of the invention will become more apparent and the invention itself will be best understood by referring to the following description of an embodiment taken in conjunction with the accompanying drawings in which:

Figs. 1 and 2 together represent a telecommunication switching system according to the invention;

Figs. 3 to 5 when positioned below each other with Fig. 5 on top represent transmitter/receiver circuits ETRU and STRU of Figs. 1 and 2 in detail.

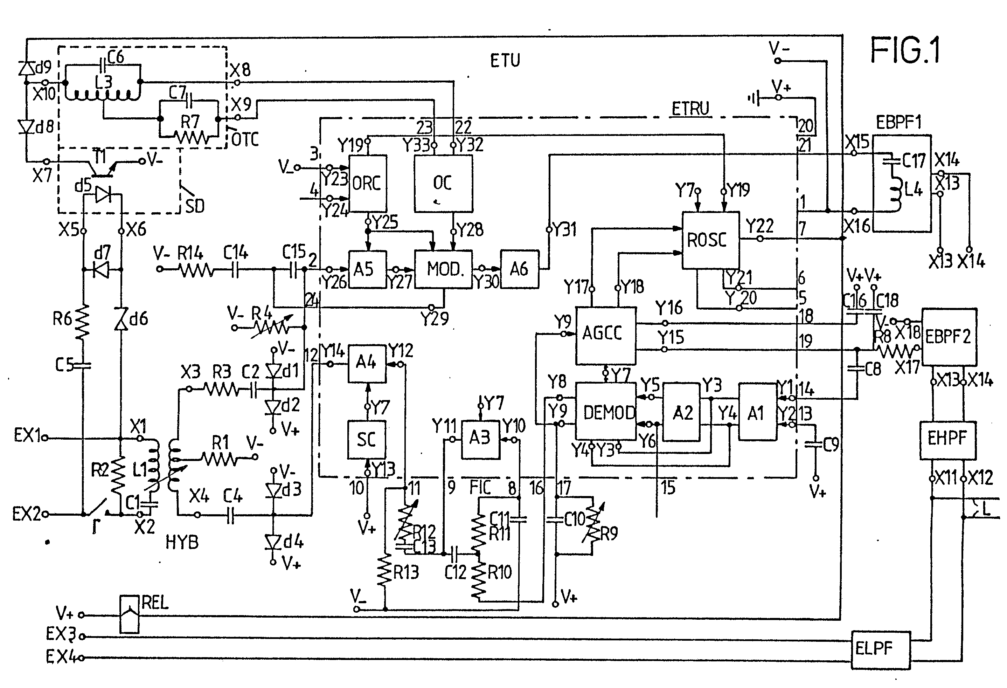

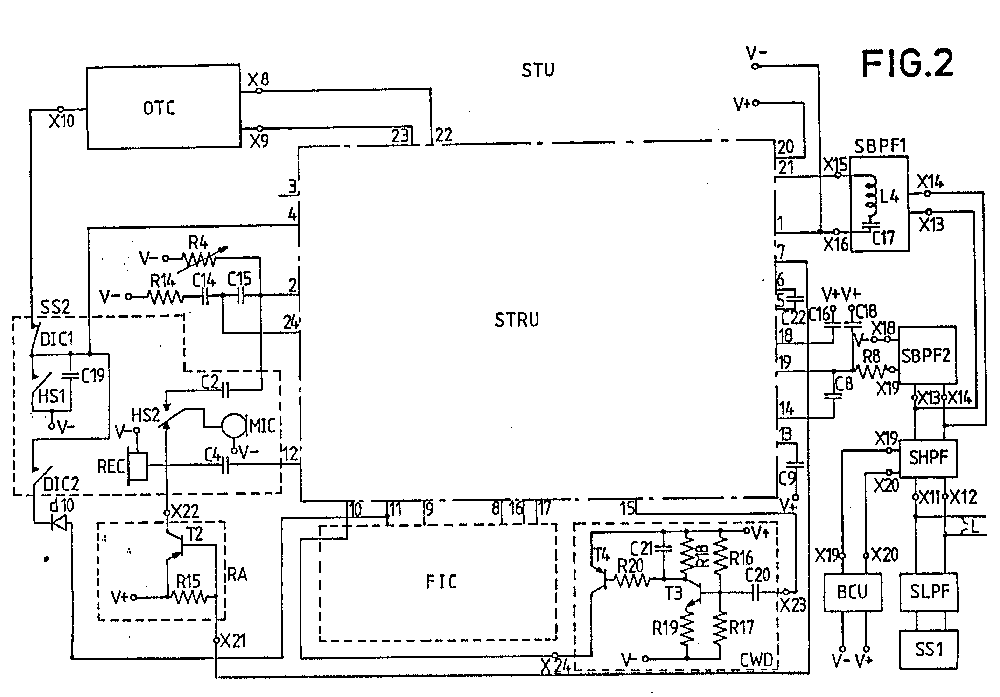

The telecommunication switching system shown is a telephone switching system which includes exchange equipment (Fig. 1) and subscriber equipment (Fig. 2) interconnected by a transmission link constituted by telephone line L. The exchange equipment is fed by a DC source derived from a 48 Volts exchange battery (not shown) and providing supply voltages V+ and V−, V+ being grounded. The subscriber equipment is fed by a local NiCd battery BCU, trickle charged from the exchange battery via the telephone line and providing supply voltages V+ and V−. The exchange equipment Fig. 1 comprises an exchange terminal unit ETU connected between the exchange terminals EX1, EX2 and the telephone line L and a lowpass filter ELPF connected between the telephone line L and the exchange terminals EX3, EX4, the exchange including the usual switching circuitry. The subscriber equipment (Fig. 2) comprises a telephone subset SS1 connected to the telephone line L via a lowpass filter SLPF and an additional telephone subset SS2 connected to the telephone line L via a subscriber terminal unit STU.

The above telephone switching system is a so called 1 + 1 carrier system of the type described in the above mentioned article by D. A. Ashford, i.e. a system wherein the transmission of speech and signalling, i.e. ringing and dialing, information between the exchange and the subscriber telephone subset SS1 is performed in the usual way, whereas for the transmission of such information between the exchange and the additional telephone subset SS2 use is made of amplitude modulation with double sideband and transmitted carrier. For transmission towards SS2 a carrier wave at 64 kHz is used, whilst for transmission in the opposite direction a carrier wave at 28 kHz is used. Dialling pulses from SS2 and ringing signals towards SS2 are transmitted by pulsing the carrier wave. In SS2 the ringing function is carried out by operating an electrodynamic microphone MIC of the subset SS2 as a receiver during the ringing phase, as will be explained later.

Principally referring to Fig. 1, the exchange terminal unit ETU mainly includes a hybrid circuit HYB, a signal detector SD, an oscillator tank circuit OTC, a relay REL having a make contact r, a highpass filter EHPF, bandpass filters EBPF1 and EBPF2, and a transmitter/receiver chip ETRU with 24 connections to the 24 terminals of a package (not shown) wherein the chip is mounted. For simplicity these connections and terminals are called chip terminals and are numbered 1 to 24. ETRU includes a receiver with signal input terminal Y1 and signal output terminal Y14 and a transmitter with signal input terminal Y26 and signal output terminal Y31.

The hybrid circuit HYB, the purpose of which is well known, has terminals X1 and X2 which are connected to exchange terminals EX1 and EX2 directly and via relay contact r respectively. These terminals X1, X2 are also interconnected by the series connection of coil L1 and capacitor C1. The HYB also has output terminal X3 and input terminal X4 interconnected by coil L2 which is coupled with coil L1 and has a midpoint tapping connected to V− via balancing resistor R1. The terminals X1, X2 are further also shunted by resistor R2. Output terminal X3 of the HYB is connected to input terminal Y26 of the transmitter of ETRU via the series connection of resistor R3, DC blocking capacitor C2 and chip terminal 2 which is further connected to V− via variable resistor R4. The purpose of R3 and R4 will be explained later. Chip terminal 2 is also connected to the junction point of overvoltage protection diodes d1 and d2 which are connected in series between V− and V+. The input terminal X4 of the HYB is connected to output terminal Y14 of the receiver circuit of ETRU via DC blocking capacitor C4 and chip terminal 12 which is also connected to the junction point of overvoltage protecting diodes d3 and d4 connected in series between V− and V+.

The signal detector SD with input terminals X5, X6 and output terminal X7 is constituted by an optical coupler comprising a photo diode d5 which is connected between X5 and X6 and is optically coupled with a phototransistor T1 the emitter of which is connected to V− and the collector of which constitutes the detector output terminal X7. Exchange terminal EX1 is connected to input terminal X6 of SD via Zener diode d6, whilst exchange terminal EX2 is connected to input terminal X5 of SD via capacitor C5 in series with resistor R6. Terminals X5 and X6 are further shunted by limiter diode d7. The purpose of the signal detector SD is to detect the presence of a 20 Hz signal e.g. a pulse waveform on the exchange terminals EX1, EX2, such a 20 Hz pulse waveform being supplied by the exchange when the telephone subscriber set SS2 (Fig. 2) has to be called, as will be explained later. Zener diode d6 prevents the SD to react to speech signals, such signals being at a much lower voltage level than the 20 Hz pulse waveform; capacitor C5 is a DC blocking capacitor and resistor R6 serves for limiting the current through the optical coupler.

The oscillator tank circuit OTC forms together with an oscillator circuit OC, to be described later, a Hartley carrier wave oscillator OTC, OC able to generate a carrier wave at 64 kHz. The OTC has terminals X8, X9 and X10 and comprises capacitor C6 shunted by coil L3 having a midpoint tapping connected to the parallel connection of resistor R7 and capacitor C7. Terminals X8 and X9 are connected to ends of the parallel circuits C6, L3 and C7, R7 respectively and are also connected to terminals Y32 and Y33 of the OC respectively. Terminal X10 of OTC is connected to the other end of parallel circuit C6, L3 and is further connected to the junction point of the anodes of diodes d8 and d9 the cathodes of which are connected to terminal X7 of the SD and via chip terminal 7 to output terminal Y22 of a ringing oscillator/switching circuit ROSC also to be described later. Thus, as will become clear later, the oscillator tank circuit OTC and therefore also the whole carrier wave oscillator circuit OTC, OC may be controlled either from the signal detector SD or from the ringing oscillator/switching circuit ROSC. To be noted that the output terminal Y22 of ROSC is also connected to V+ via chip terminal 7 and the winding of relay REL.

The highpass and bandpass filters EHPF and EBPF1 and EBPF2 are not shown in detail as they are well known and do not form part of the invention. EHPF has terminals X11, X12 connected to line L and terminals X13, X14 connected to like named output terminals X13, X14 of EBPF1 and to like named input terminals X13, X14 of EBPF2. Filter EBPF1 further has input terminals X15, X16 which are connected to transmitter signal output terminal Y31 of ETRU via chip terminal 21 and to chip terminal 1 which is connected to V− respectively. In EBPF1 capacitor C17 is connected in series with coil L4 between terminals X15 and X16. Filter EBPF2 further has output terminals X17, X18. Terminal X18 is connected to V− and terminal X17 is connected to receiver signal input Y1 of ETRU via resistor R8 and capacitor C8 in series and to chip terminal 19 which is connected to output Y15 of an AGC circuit AGCC of the ETRU. Chip terminal 19 is also connected to V+ via capacitor C18 which serves for filtering the 3rd, 4th and 7th harmonics, of the locally generated 64 kHz carrier capacitively applied to the receiver input via the transmitter output and the filter circuits SBPF1 and SBPF2 and/or via tap active parasitic couplings as well as the 7th, 9th and 16th harmonics of the 28 kHz carrier received on the receiver input from the subscriber equipment (Fig. 2). These higher harmonics could otherwise produce in the DEMOD audible intermodulation products. The purpose of EHPF and ELPF is to isolate the communication paths from EX1, EX2 and EX3, EX4 towards the line L and vice-versa and that of EBPF1 and EBPF2 is to isolate the transmitter and receiver of ETRU.

The above mentioned receiver circuit of the ETRU mainly includes amplifier circuits A1 to A4, a demodulator circuit DEMOD, an AGC circuit AGCC, a ringing oscillator/switching circuit ROSC, an OR-gate circuit ORC, and a switching circuit SC, all interconnected as shown.

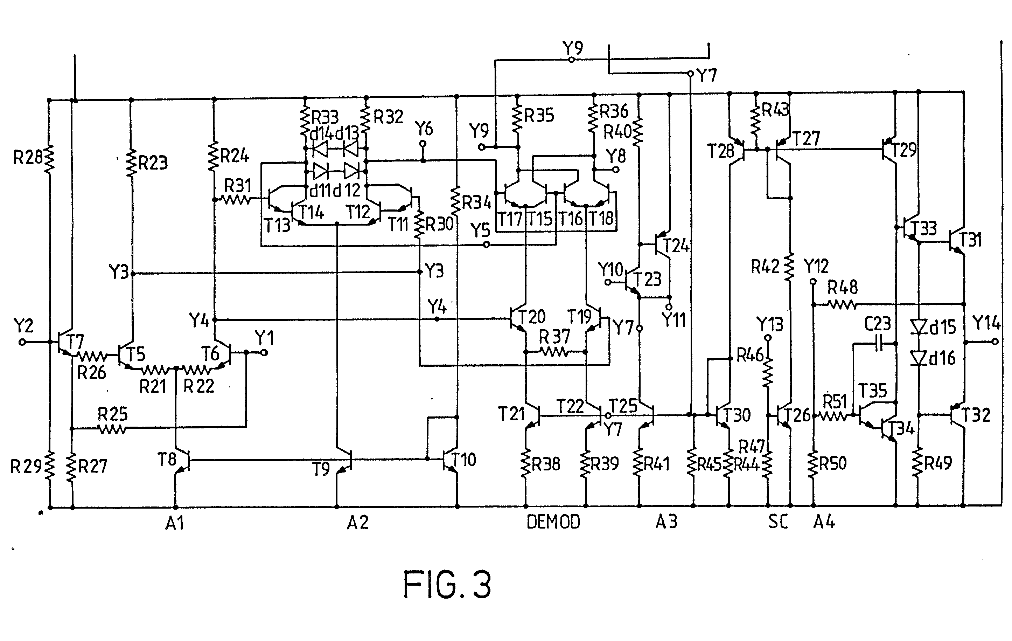

The amplifier circuit A1 has input terminals Y1, Y2 and output terminals Y3, Y4. Input terminal Y1 is the signal input terminal and is coupled to output terminal X17 of EBPF1, as already mentioned above. Input terminal Y2 is connected to chip terminal 13 which is connected to V+ via capacitor C9 providing a low AC impedance path at the carrier frequency, as will be explained later in relation to Fig. 3. Output terminals Y3, Y4 of A1 are connected directly to like named input terminals Y3, Y4 of the demodulator circuit DEMOD and via amplifier circuit A2 to input terminals Y5, Y6 of this DEMOD. The latter has control input terminal Y7 and output terminals Y8 and Y9. To be noted that terminal Y6 is connected to chip terminal 15 but in the ETRU the latter terminal is not used.

The purpose of amplifier circuit A1 is to transform an asymmetrical modulated or not modulated carrier wave applied to its signal input terminal Y1 into an amplified symmetrical modulated or not modulated carrier wave which is then applied to the demodulator circuit DEMOD, on the one hand directly and on the other hand via the amplifier circuit A2 the purpose of which is to recover the non modulated carrier wave from the input carrier wave by performing a high amplification and a subsequent clipping of the amplified signal. The DEMOD then provides at its output terminals Y8 and Y9 positively and negatively directed rectified signals respectively, as will be explained later in relation to Fig. 3.

Control input terminal Y7 of the DEMOD is connected to like named control input terminals Y7 of AGCC, ROSC, A3 and A4 all these control input terminals Y7 being connected (not shown) to the like named control output terminal Y7 of switching circuit SC having control input terminal Y13 which is connected to chip terminal 10. In the ETRU SC continuously activates Y7 as Y13 is connected to V+ and thus continuously enables the operation of A4, A3, DEMOD, AGCC and ROSC, whereas in the STRU the condition of Y7 depends on the receipt of a carrier wave on Y13, as will be explained later.

Output terminal Y9 of the DEMOD is connected back to the signal input terminal Y1 of the amplifier circuit A1 via the AGC circuit AGCC. More particularly, output terminal Y9 is connected to input terminal Y9 of the AGCC having two output terminals Y15, Y16 which are connected to signal input terminal Y1 of amplifier circuit A1 via chip terminal 19, capacitor C8 and chip terminal 14 and to V+ via chip terminal 18 and capacitor C16 respectively. The output terminal Y9 of the DEMOD is further connected to V+ via chip terminal 17 and variable AGC regulating resistor R9 shunted by smoothing capacitor C10.

The purpose of the AGCC is to maintain the signal voltage level at the signal input terminal Y1 of the amplifier circuit A1 at a relatively constant value, e.g. 7 milli-Volts, notwithstanding considerable amplitude variations of the input signal applied to Y1 from the output of the filter EBPF2. Such signal variations may for instance amount from 7 milli-Volts to 2.1 Volts, i.e. have a maximum variation as large as 300.

The output terminal Y8 of the DEMOD is connected to a well known Sallen-Key lowpass filter circuit the purpose of which is to remove high frequency carrier residues from the positively detected rectified signal provided at the output Y8 of the DEMOD. This filter circuit includes unity gain amplifier circuit A3, resistors R10, R11 and capacitors C11, C12. The resistors R10 and R11 are connected in series between output terminal Y8 of the DEMOD and input terminal Y10 of amplifier circuit A3. The terminals Y8 and Y10 are connected to the chip terminals 16 and 8 respectively, chip terminal 8 being connected to V− via capacitor C11. The output terminal Y11 of amplifier circuit A3 is connected back to the junction point of resistors R10, R11 via chip terminal 9 and capacitor C12.

The output terminal Y11 of amplifier circuit A3 is also connected to input terminal Y12 of push-pull output amplifier circuit A4 via DC blocking capacitor C13 in series with variable resistor R12 which is used to adjust the amplification of A4 and chip terminal 11 which is also connected to V− via resistor R13. Output amplifier circuit A4 further has output terminal Y14 connected to V− in the HYB via capacitor C4, part of coil L2 and resistor R1, as also already described above.

The AGCC above considered also has output terminals Y17, Y18 which are connected to like named input terminals Y17, Y18 of the ringing oscillator/switching circuit ROSC having further input terminals Y7, Y19, Y20, Y21 and output terminal Y22. Control input terminal Y7 is continuously activated as already described and control input terminal Y19 is connected to a like named control output terminal Y19 of the OR-gate circuit ORC having input terminals Y23, Y24 and output terminals Y19 and Y25. As will become clear later, because input terminal Y23 is at V−, output terminal Y25 is at V− too and because input terminal Y24 of ORC is not used output terminal Y19 is at V− and therefore continuously enables the ROC. Input terminals Y20 and Y21 of ROSC are connected to chip terminals 5 and 6 respectively and are not used in the ETRU so that the ROSC operates as a switch and not as a ringing oscillator. Finally, output terminal Y22 is connected to chip terminal 7 which is coupled on the one hand to V+ via the winding of relay REL and on the other hand to the cathode of diode d9, as already described above. The purpose of the ringing oscillator/switching circuit ROSC in the ETRU is to operate relay REL subsequent to the receipt of a 28 kHz carrier wave from the subscriber equipment (Fig. 2) and to pulse this relay when due to a dialing operation in subset SS2 a pulsed 28 kHz carrier is received in ETRU. Another function of the ROSC is to operate, via diode d9, the carrier wave oscillator OTC, OC in order that the latter should transmit a 64 kHz carrier back to the subscriber equipment (Fig. 2) subsequent to the receipt of a 28 kHz carrier therefrom.

The transmitter of ETRU mainly includes input amplifier circuit A5, modulator circuit MOD, output amplifier circuit A6 and oscillator circuit OC. Both A5 and MOD have a control input terminal Y25 connected to a like named control output terminal Y25 of the OR-gate circuit ORC. In the ETRU this control output terminal Y25 which is always at V− continuously enables the operation of A5 and MOD. Amplifier circuit A5 further has low frequency signal input terminal Y26 which is connected to output terminal X3 of the HYB via DC blocking capacitor C2 and resistor R3, as already described above. R3 serves for establishing the amplification factor of amplifier circuit A5, this factor being made equal to unity in the ETRU. The input terminal Y26 of A5 is also connected to V− via variable resistor R4 which serves for regulating the voltage level of the carrier in the modulator circuit MOD. Amplifier circuit A5 also has output terminal Y27 connected to the like named signal input terminal Y27 of the modulator circuit MOD. The latter circuit further has a carrier wave input terminal Y28 connected to the like named output terminal Y28 of the oscillator circuit OC which together with OTC forms a 64 kHz Hartley carrier wave oscillator, as already mentioned above, and a control input terminal Y29 connected to V− via capacitor C14 and resistor R14 in series, these components serving for regulating the modulation depth of the carrier wave. Control input terminal Y29 is also connected to input terminal Y26 of amplifier circuit A5 via oscillation preventing capacitor C15.

The purpose of the MOD is to modulate a low frequency signal provided by A2 on the 64 kHz carrier wave generated by the carrier wave oscillator OC, OTC and to apply the modulated signal thus obtained at its output terminal Y30 to push-pull output amplifier A6. The latter amplifier A6 has output terminal Y31 which is connected to V− via capacitor C17 and coil L4 forming part of the EBPF1.

To be noted that chip terminal 20 is connected to V+ which is at ground potential.

Principally referring to Fig. 2 components similar to those used in the exchange equipment of Fig. 1 are designated by the same reference numerals. The telephone subset SS2 shown therein includes a handset (not shown) with an electrodynamic microphone MIC and a telephone receiver REC, a dial (not shown) with break contact DIC1 and make contact DIC2, and a hook switch with make contact HS1 and change-over contact HS2. The subscriber terminal unit STU mainly includes a transmitter/receiver chip STRU which is identical to chip ETRU and which is therefore not shown in detail, a carrier wave detector CWD, a ringing amplifier circuit RA, a battery charging unit BCU, an oscillator tank circuit OTC, a highpass filter SHPF and bandpass filters SBPF1 and SBPF2. OTC and the part indicated by FIC which are detailed in Fig. 1 are now only represented as blocks.

The highpass and bandpass filters SHPF and SBPF1 and SBPF2 are not shown in detail as they are well known in the art and do not form part of the invention. These filters are connected to the transmitter/receiver chip STRU in an analogous way as EHPF, EBPF1 and EBPF2 are connected to ETRU and their purpose is similar to that of the latter filters. However, the line L is now connected via a DC path in SHPF and terminals X19, X20 thereof to the battery charging unit BCU known from US patent No. 3 639 692 and having output poles V+ and V−. As described therein this battery is charged when subset SS1 is not used.

The oscillator tank circuit OTC is similar to OTC of Fig. 1 and its terminals X8, X9 are likewise connected to the terminals Y32, Y33 of OC. However its output terminal X10 is now connected to V−

via the series connection of dial break contact DIC1 and hookswitch contact HS1 shunted by capacitor C19. The purpose of this connection is to enable the oscillator OTC, OC to be operated and not operated at the rhythm of the closure and opening of the DIC1 respectively, but only after HS1 has been closed due to the handset of SS2 having been hooked off. Also input Y24 (i.e. chip terminal 4) of the OR-gate circuit ORC is now connected to V− via HS1 and C19 in parallel, the input Y25 of this gate (chip terminal 3) being not used. Hence, when HS1 is open the output terminal Y25 of this gate ORC is at V+ whilst the output Y19 of ORC is at V−. Thus the operation of A5 and MOD5 is inhibited, whereas that of ROSC is enabled. This ROSC is now able to operate as a ringing oscillator due to the presence of capacitor C22 between its input terminals Y20, Y21. When make contact HS1 is closed the output terminals Y25 and Y19 are brought at V− and V+ respectively, as will be explained later, thus enabling the operation of amplifier circuit A5 and modulator circuit MOD and inhibiting the operation of ringing oscillator circuit ROSC.

Input terminal Y12 (i.e. chip terminal 11) of amplifier circuit A4 is connected to V− via diode d10, dial make contact DIC2 and the parallel circuit C19, HS1. The purpose of this circuit is to prevent dialing clicks from being heard in the telephone receiver REC. Indeed, because DIC2 is closed when a number is dialed the input Y12 of the amplifier circuit A4 is then coupled to V− via d10, DIC2 and HS1 so that this amplifier circuit is then substantially short-circuited, thus preventing REC from being influenced.

The output terminal Y14 (i.e. chip terminal 12) of receiver amplifier A4 is connected to V− via capacitor C4 and telephone receiver REC having a resistance of about 200 ohms, whilst the input terminal Y26 (i.e. chip terminal 2) of transmitter amplifier circuit A5 is connected to V− via capacitor C2, make contact of hookswitch change-over contact HS2 and electrodynamic microphone MIC. Thus the output of receiver amplifier circuit A4 is continuously connected to REC, whereas the microphone MIC is only connected to the input of transmitter amplifier circuit A5 when the handset of telephone subset SS2 has been hooked off.

The ringing amplifier circuit RA with terminals X21 and X22 includes PNP transistor T2, the base X21 of which is connected on the one hand to the output Y22 of the ringing oscillator/switching circuit ROSC via chip terminal 7 and on the other hand to its emitter via resistor R15, this emitter being connected to V+. The collector of T2, i.e. terminal X22, is connected to V− via break contact of change-over contact HS2 and electrodynamic microphone MIC which is used as a ringer in the SS2. The purpose of RA is to further amplify the signal provided by the ringing oscillator/switching circuit ROSC before applying this signal to the microphone MIC in case the hookswitch of SS2 has not been hooked-off.

The carrier wave detector CWD has an input terminal X23 connected to output terminal Y6 of receiver amplifier circuit A2 via chip terminal 15 and an output terminal X24 connected to input terminal Y13 of switching circuit SC via chip terminal 10. The input terminal X23 is connected to the base of NPN transistor T3 via DC blocking capacitor C20, this base being further connected to the junction point of biasing resistors R16 and R17 connected between V+ and V−. The collector and emitter of T3 are connected to V+ and V− via resistors R18 and R19 respectively, resistor R18 being shunted by smoothing capacitor C21. The collector of T3 is also connected to the base of PNP transistor T4 via resistor R20. The emitter of this transistor T4 is connected to V+ and its collector is connected to output terminal X24. The purpose of CWD is to detect the presence of a carrier at the output Y6 (i.e. chip terminal 15) of the demodulator circuit DEMOD and to only then enable the operation of the receiver (A1 and A2 excepted) i.e. A4, A3, DEMOD, AGCC and ROSC via switching circuit SC which then activates its control output terminal Y7. In the CWD the carrier wave is rectified by transistor T3 and smoothened by capacitor C21 and then applied to transistor T4 which acts as a switch.

Before describing ETRU and STRU in more detail, the operation of the system is briefly described hereinafter by making reference to Figs. 1 and 2. Hereby only the telephone subset SS2 and a telephone subset coupled to exchange terminals EX1 and EX2 are considered.

When a telephone subset (not shown) coupled to the terminals EX1, EX2 and the telephone subset SS2 are both in the hooked-on condition no carrier is transmitted. The various circuits of the ETU (Fig. 1) are able to operate (Y25 and Y19 at V− and Y13 at V+) and the relay REL is in the unoperated condition, whereas in the STU (Fig. 2) only the amplifiers A1 and A2 are able to operate. Indeed, in the STU the amplifier circuits A3, A4, the demodulator circuit DEMOD, the AGC circuit AGCC and the oscillator/switching circuit ROSC are disabled due to the input control terminals Y7 being de-activated and the amplifier circuit A5 and the modulator circuit MOD are disabled due to terminal Y25 of the ORC being at V+. Thus in the STU the power consumption in the quiescent state is small.

First the establishment of a call connection between a calling telephone subset connected to the exchange terminals EX1, EX2 and called telephone subset SS2 is described.

In this case the exchange supplies a 20 Hz pulse waveform via exchange terminals EX1, EX2 to signal detector SD. Due to the presence of the diode d7 the photo-transistor T1 of the SD is alternately operated and not operated together with the associated carrier wave oscillator circuit OTC, OC. As a consequence, the modulator circuit MOD provides at its output Y30 a 64 kHz carrier wave which is pulsed at the rhythm of the 20 Hz pulse waveform, i.e. which is alternatively present and absent. This pulsed carrier wave is amplified by amplifier circuit A6 and then transmitted via EBPF1 and EHPF on the line L towards the subscriber equipment (Fig. 2) wherein it is applied via SHPF and SBPF2 to signal input Y1 of amplifier circuit A1 and from there via amplifier circuits A1, A2 to the input terminals X23 of the carrier detector CWD. As a consequence the CWD is operated so that its output terminal X24 and therefore also the control input terminal Y13 of switching circuit SC of STRU are both brought at V+. Due to this control output Y7 is activated so that the operation of A4, A3, DEMOD, AGCC and ROSC forming part of the receiver circuit is enabled. Because the operation of the DEMOD is enabled the 64 kHz carrier pulsed at the rhythm of 20 kHz is applied via part of the AGCC to the enabled ringing oscillator circuit ROSC which is then operated. ROSC operates the microphone MIC as a ringer via the ringing amplifier RA and thus warns telephone subset SS2 that it is being called. When the telephone handset in SS2 is subsequently hooked-off, hookswitch contact HS1 is closed, whereas the position of change-over contact HS2 is changed. By the closure of HS1 the output terminals Y25 and Y19 of ORC of STU are connected to V+ and at V− respectively, thus enabling the operation of A5 and MOD and disabling the operation of ROSC as a consequence of which the MIC is no longer operated as a ringer. By the change of position of HS2 the MIC is disconnected from the RA and coupled to input terminal Y22 of transmitter amplifier circuit A5 so that the transmitter is ready to transmit speech signals. By the closure of HS1 also input terminal X10 of OTC is connected to V− via DIC1 and HS1 so that carrier wave oscillator OTC, OC and the modulator MOD of STU are operated and that consequently a 28 kHz carrier wave is transmitted on the line L via A6, SBPF1 and SHPF. The 28 kHz carrier wave is received in the exchange equipment (Fig. 1) and via EHPF, EPBF2, A1, A2, DEMOD and AGCC it is applied to the ROSC which as a consequence connects V− to its output terminal Y22. Due to this, the carrier wave oscillator OTC, OC in the ETU is then operated in a continuous way so that a 64 kHz carrier wave is then continuously transmitted to the subscriber equipment and relay REL is energized in a continuous mode. By the closure of contact r of this relay the exchange is informed of the fact that it should no longer transmit the 20 Hz signal and the transmitter and receiver are both connected to the line L via the hybrid circuit.

The system is now in a condition wherein speech signals may be transmitted from the exchange to SS2 via the line L and vice-versa. By the respective modulator these speech signals are modulated on the 64 kHz carrier wave when transmitted to SS2 and on the 28 kHz carrier wave when transmitted to the exchange. At the end of a conversation, when e.g. the telephone handset of subset SS2 is hooked on, the operation of OTC, OC is stopped so that the transmission of the 28 kHz carrier wave is stopped. As a consequence in the ETU the output terminal Y22 of ROSC is again de-activated so that also OTC is made inoperative and that also the transmission of the 64 kHz carrier wave is stopped.

The case is now considered wherein telephone subset SS2 makes a call towards a telephone subset (not shown), connected to the exchange, by hooking off the telephone handset and dialing a called subscriber's number.

By hooking off the telephone handset in SS2, switch hook contact HS1 is closed and the position of change-over contact HS2 is changed so that terminal X10 of OTC is connected to V— via dial contact DIC1 and hookswitch contact HS1 in series and that the microphone MIC is coupled to the input Y26 of transmitter amplifier circuit A5. V— is also connected to input terminal Y24 of ORC so that the output terminals Y25 and Y19 thereof are connected to V— and V+ respectively, thus enabling A5 and MOD and disabling ROSC. Because V— is connected to OTC the carrier wave oscillator OTC, OC is operated so that a 28 kHz carrier wave is transmitted to the exchange equipment via A5, MOD, A6, SBPF1, EHPF and the line L. As a response the exchange equipment then transmits a 64 kHz carrier wave to the receiver equipment in a same way as described above.

When a called subscriber's number is dialed in the telephone subset SS2 the dial contact DIC1 is opened and closed several times in succession for each dialed digit, whilst dial contact DIC2 remains closed during the whole dialing operation. By each opening of DIC1 the operation of carrier wave oscillator OTC, OC is stopped so that a pulsed 28 kHz carrier wave is transmitted to the exchange equipment. By the closure of DIC2 the input Y12 of the amplifier A4 is substantially short-circuited so that dial clicks cannot be heard in the receiver REC. When the pulsed 28 kHz carrier wave is received in the exchange equipment it has for effect that the output terminal Y22 of ROSC is alternately activated and de-activated so that relay REL is operated in a pulsed mode. As a consequence the loop to the exchange is also closed in a pulsed mode by contact r so that the dialed number is transmitted to the exchange. The exchange subsequently couples the called telephone subset to the exchange terminals EX1, EX2, this telephone subset being then able to communicate with telephone subset SS2 in the way already described above, the speech signals being modulated on a 64 kHz carrier wave when transmitted to SSL and in a 28 kHz carrier wave when transmitted to the exchange.

Reference is now made to Figs. 3 to 5 for details of the identical transmitter/receiver units ETRU and STRU. Each of these units includes transistors T5 to T74, resistors R21 to R97, capacitors C23 and C24 and diodes d11 to d22, all these components being interconnected as shown and the terminals of the constituent blocks shown in Figs. 1 and 2 being designated by the same reference numerals. The leads 20′ and 20″ are connected to chip terminal 20, itself connected to V+ and lead 1 is connected to chip terminal 1 itself connected to V—. Each of the units ETRU and STRU includes a number of current sources connected between V+ and V—, i.e.:

— a current source (Fig. 3) comprising resistor R34 and diode connected transistors T8 to T10. The emitter surface of each of the transistors T8 and T9 is twice the emitter surface of transistor T10 so that the current able to flow in T8 and in T9 is twice that which can flow through T10;

— a current source (Fig. 3) comprising transistors T27, T26, T28, T29, T30, T25, T22, T21, T36, T37, T38, T47 and associated resistors. The emitter surface of the transistors T25, T30, T36; T21, T22; and T38 is equal to 2; 2.25 and 5 times the emitter surface of transistors T8 to T10, T37 and T47;

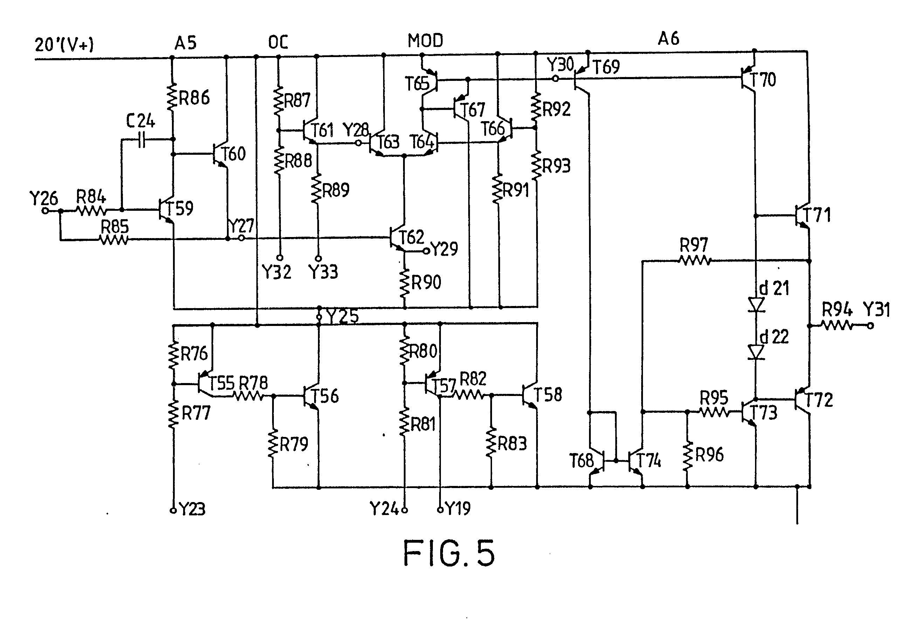

— a current source (Fig. 5) comprising transistors T65, T68, T69, T70, T74. T74 has an emitter surface equal to twice that of the other transistors.

Receiver input amplifier circuit A1 with terminals Y1, Y2, Y3, Y4 is a differential amplifier and includes transistors T5 to T8 and resistors R21 to R29. The emitters of transistors T5 and T6 are interconnected by resistors R21 and R22 the junction point of which is connected to V— via the collector-to-emitter path of current mirror transistor T8. The collectors of transistors T5 and T6 are connected to V+ via resistors R23 and R24 and constitute output terminals Y3 and Y4 of A1 respectively.

So far the differential amplifier circuit is of the type disclosed in the book "201 analog IC designs, compiled, tested and written by the staff of Interdesign Incorporated", more particularly on page 9, Fig. 21 thereof.

However, the present amplifier circuit A1 is a single-ended amplifier circuit the signal input Y1 of which is connected to the base of transistor T6 directly and to the base of transistor T5 via resistors R25 and R26 in series. The junction point of the latter resistors is connected to the emitter of emitter follower transistor T7 the collector-to-emitter path of which is connected in series with resistor R27 between V+ and V—. The base of this transistor is connected to the junction point of biasing resistors R28 and R29. The latter junction point constitutes input terminal Y2 of A1, Y2 being also connected to V+ via capacitor C9 (Figs. 1, 2) which offers a low impedance at the received carrier wave frequency.

The purpose of the differential amplifier circuit A1 is to transform an asymmetric carrier wave applied to its signal input terminal Y1 into a symmetric slightly amplified carrier wave and to then apply the latter carrier wave provided at its output terminals Y3, Y4 both to amplifier circuit A2 and to demodulator circuit DEMOD. Because of the emitter follower configuration of transistor T7 and the presence of capacitor C9 a low impedance path to ground (from an AC viewpoint) is present at the junction point of resistors R25, R26 and R27 thus improving the common mode behaviour of the amplifier circuit.

Also receiver amplifier circuit A2 with terminals Y3 to Y6 is a differential amplifier circuit and includes transistors T9 to T13, resistors R30 to R34 and diodes d11 to d14. The transistors of each of the pairs T11, T12 and T13, T14 are connected in a Darlington configuration and the input terminals Y3 and Y4 are connected to the bases of transistors T11 and T13 via resistors R30 and R31 respectively. The collectors of T11, T12 and T13, T14 are connected to V+ via resistors R32, R33 and constitute the output terminals Y6 and Y5 respectively. These collectors are also interconnected via the pairs of series connected clipping diodes d11, d12 and d13, d14, the diodes of the pairs d11, d12 and d13, d14 being oppositely poled. The junction point of the emitters of T12 and T14 is connected to V− via the collector-to-emitter path of current mirror transistor T9. Finally, in the STU the output terminal Y6 is also connected to the input terminal X23 of carrier wave detector CWD via chip terminal 15.

Also amplifier circuit A2 is of the type disclosed in the above mentioned Fig. 21 of the book, except for the fact that use is now made of Darlington transistor pairs and of clipping diodes d11 to d14.

The purpose of differential amplifier circuit A2 is to provide such a high amplification that all modulation is removed from a carrier wave differentially applied between the input terminal Y3, Y4 so that a non-modulated carrier wave is generated between the output terminals Y5, Y6 from which it is then applied to modulator circuit DEMOD and also to the carrier wave detector CWD in the STU. This non-modulated carrier wave has a rectangular waveform with an amplitude of about 1.2 Volts determined by the limiter means constituted by the clipping diodes d11 to d14.

Because a carrier wave is recovered by the action of amplifier circuits A1 and A2 the latter in fact constitute a carrier wave recovery device, amplifier circuit A2 being a carrier wave recovery circuit proper.

The demodulator circuit DEMOD is of the type generally available on the market, e.g. No MC 1496 manufactured by National Semiconductors and Motorola and will therefore not be described in detail. It has terminals Y3 to Y9 and includes transistors T15 to T22 and resistors R35 to R39. Its input terminals Y3 and Y4 are connected to the bases of transistors T19 and T20 respectively, and its input terminals Y5 and Y6 are connected to the bases of transistors T15, T16 and T17, T18 respectively. Control input terminal Y7 is connected to the joined bases of current mirror transistors T21 and T22 and output terminals Y8 and Y9 are connected to the collectors of transistors T18 and T17 respectively.

The purpose of the demodulator circuit DEMOD is to generate positively and negatively directed demodulated or rectified signals at its output terminals Y8 and Y9 respectively in response to a modulated or non-modulated carrier wave being applied at its input terminals Y3, Y4 and to a non-modulated carrier wave being applied to its input terminals Y5, Y6 and on condition that it is enabled due to its control input terminal Y7 being activated. In the ETU this is always so and in the STU this occurs upon a carrier wave being detected by the CWD.

To be noted that the demodulator circuit DEMOD shown is able to demodulate small signals so that amplifier circuit A1 has not to provide a high amplification. This is an advantageous feature because it enables A1 to be DC coupled with the demodulator circuit as any unwanted DC offset is only slightly amplified and has no substantial effect on the output of A1. Notwithstanding the amplifier circuit A2 provides a high amplification it is nevertheless also DC coupled with the demodulator circuit because this time even an amplified DC offset can have no harmful effect because the output signal of the DEMOD is obtained by clipping after amplification.

The positively directed rectified output signal appearing at the output terminal Y8 of the demodulator circuit is filtered in a Sallen-Key low pass filter network including resistors R10, R11, capacitors C11, C12 and amplifier circuit A3 (Figs. 1, 2) to remove all carrier wave residues. The latter amplifier circuit A3 has input terminal Y10 and output terminal Y11 and includes transistors T23 to T25 and resistors R40 and R41. The collector-to-emitter paths of the transistors T23 and T25 are connected between V+ and V− in series with collector resistor R40 of T23 and emitter resistor R41 of T25. The base of transistor T23 constitutes input terminal Y10 of A3 and its collector is connected to the base of transistor T24 the emitter of which is directly connected to V+ and the collector of which is connected to the emitter of T3 and constitutes output terminal Y11 at which appears a low frequency output signal when the input signal to the demodulator was a modulated carrier wave. Otherwise no signal appears at Y11.

The switching circuit SC has control input terminal Y13 connected to the base of transistor T26 via resistor R46 and control output terminal Y7 which is connected to the bases of transistors T21, T22, T25, T30, T36, T37, T38 and T47 which form part of the above described current source. In the ETU, control input terminal Y13 is continuously at V+ so that transistor T26 and therefore the last mentioned current source is continuously operated due to which control output terminal Y7 is continuously activated. In the STU, control input terminal Y13 is connected to the output terminal X24 of the carrier wave detector CWD and is only activated when a carrier wave is detected therein. In this case the above current source is operated and control output terminal Y7 is activated. When this happens the operation of A4, A3, DEMOD, AGCC and ROSC is enabled.

The above mentioned low frequency signal is applied to input terminal Y12 of output amplifier circuit A4 via capacitor C13 and variable resistor R12 (Figs. 1, 2) in series, terminal Y12 being connected to V− via resistor R13. Amplifier circuit A4 has terminals Y7, Y12 and Y14 and includes transistors T26 to T35, resistors R42 to R51, capacitor C23 and diodes d15, d16. It is a so-called class B complementary output stage of the type but different from the one disclosed in the book "Analysis and design of analog integrated circuits", by P. R. Gray and R. G. Meyer, published by John Wiley & Sons, 1977, p. 303, Fig. 5.21. In this output stage the collector-to-emitter path of NPN transistor T31 and the emitter-to-collector path of PNP substrate transistor T32 are connected in series between V+ and V−, their junction point constituting output terminal Y14 which is connected to input terminal Y12 via feedback resistor R48 which together with variable resistor R12 determines the amplification factor of A4. To be noted that because T72 is a substrate transistor its collector is directly connected to V−. The bases of these transistors T31, T32 are interconnected by series connected cross-over distortion eliminating diodes d15 and d16 which are connected between V+ and V− in series with the collector-to-emitter path of emitter-follower transistor T33 and emitter resistor R49, T33 and R49 being connected to the anode of d15 and to the cathode of d16 respectively. The base of transistor T33 is connected to the joined collectors of current mirror transistor T29 and transistor T34 which are connected in series between V+ and V−. Transistor T34 forms a Darlington pair with transistor T35 and provides a high amplification because the joined collectors of T34, T35 on common emitter configuration and interconnected to T29 having an infinite impedance and because the emitter resistance of T34, T35 is zero. The input terminal is connected to V− via bias resistor R50 which is shunted by resistor R13 (Figs. 1, 2) and to the base of transistor T35 via oscillation preventing resistor R51, the latter base being also connected to the joined collectors of T29, T34 and T35 via oscillation preventing capacitor C23.

From the above it follows that the stage T31, T32, d15, d16 is driven from the input terminal Y12 via the common emitter stage T34, T35 biased to a constant current by current source T29 and via the low-impedance source provided by the emitter follower transistor T33. When the low-frequency input signal applied to input terminal Y12 goes positive from its quiescent value the voltage at the base of transistor T33 goes negative and the voltage at the base of T32 follows, drawing current from the load connected to Y14. On the contrary, when the input signal goes negative from its quiescent value the voltage at the base of T33 goes positive and the voltage at the base of T31 follows, delivering current to the load.

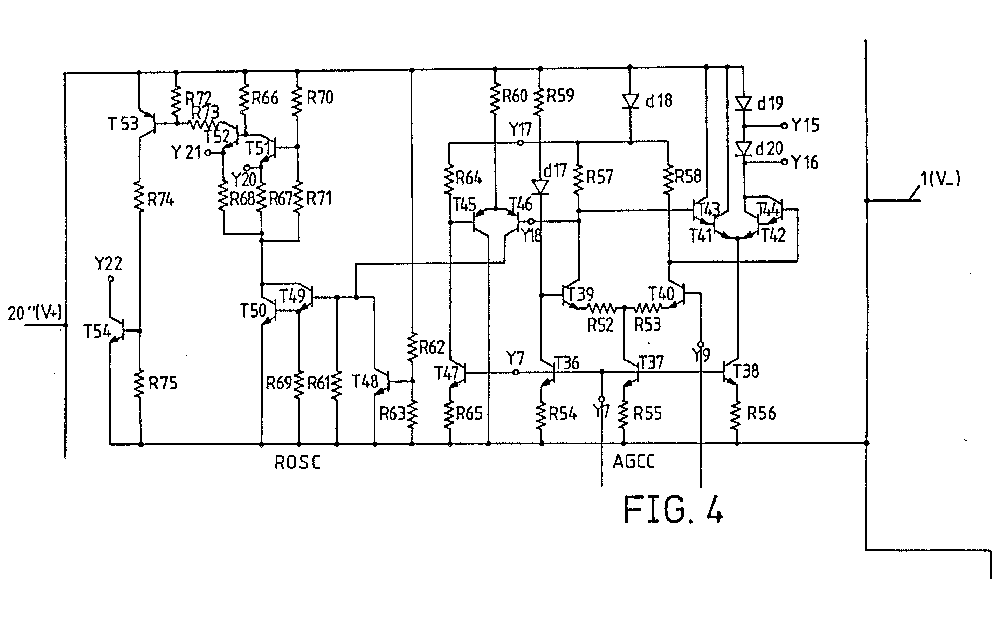

The AGCC (Fig. 4) with terminals Y7, Y9 and Y15 to Y17 includes a comparator comprising two comparator stages in cascade and is built up by means of transistors T36 to T44, resistors R52 to R58 and diodes d17 to d20.

The first comparator stage includes transistors T39 and T40 the emitters of which are interconnected by resistors R52, R53. The junction point of these resistors R52, R53 is connected to V− via the collector-to-emitter path of current mirror transistor T37 and resistor R55. The base of T37 is connected to the joined bases of the current mirror transistors T36 and T38, having emitter resistors R54 and R56 and their bases are connected to input control terminal Y7. V+ is connected to the collectors of transistors T39 and T40 via common diode d18 and resistor R57 and R58 respectively. The upper and lower ends of resistor R57 constitute the output terminals Y17 and Y18 respectively. The base of transistor T40 constitutes input terminal Y9 which is connected to V+ via resistor R35, variable resistor R9 and capacitor C10 all in parallel, whilst the base of transistor T39 is connected to the junction point of diode d17 and the collector-to-emitter path of current mirror transistor T36. Resistor R59, diode d17, transistor T36 and emitter resistor R54 are connected in series between V+ and V− so that a reference voltage VR is established at the like named junction point VR of R59 and d17, the voltage at the base of transistor T39 being then equal to VR—VD when VD is the voltage drop over diode d17.

To be noted that the inputs of the above comparator T39, T40 are each connected to the junction point of a resistor R35, R59 (abstraction being made of diode d17) and a current source T21, T36 forming a series circuit connected between V+ and V−, these current sources being interconnected or tracked so as to provide proportional currents so that a voltage variation of the supply voltage although having an influence on the current provided by these sources has no effect on the voltage difference on the comparator inputs.

The second comparator stage includes the Darlington transistor pairs T41, T42 and T43, T44. The emitters of transistors T41 and T42 are connected to V− via the collector-to-emitter path of current mirror transistor T38 and resistor R56. V+ is connected to the joined collectors of T41, T43 directly and of T42, T44 diodes d19 and d20 in series. The bases of transistors T43 and T44 are connected to the collectors of transistors T39 and T40 respectively. The cathodes of the diodes d19, d20 constitute output terminals Y15 and Y16. Output terminal Y15 is coupled to V+ via capacitor C18 (Figs. 1, 2) whilst output terminal Y16 is connected to V+ via capacitor C16 (Figs. 1, 2) and to input terminal Y1 of amplifier circuit A1. Harmonic frequency filter capacitor C18 constitutes a large AC impedance at the frequency of the carrier wave applied to it, but capacitor C16 substantially forms a short-circuit for such carrier wave. Thus the diodes d19 and d20 are substantially connected in series from a DC viewpoint and in parallel when a carrier wave is applied.

The amplitude of the negatively directed demodulated signal generated at output terminal Y9 of DEMOD and applied to input terminal Y9 of the AGCC can be regulated by means of resistor R9 (Figs. 1, 2) shunting resistor R35. Thus the point at which the AGCC becomes operative can be regulated. This input signal is also smoothened by means of capacitor C10 (Figs. 1, 2) shunting resistors R9 and R35 and when applied to the base of transistor T40 it is compared with the reference voltage VR − VD which is present at the base of transistor T39.

The automatic gain control circuit AGCC has been so calculated that in the absence of an input signal at the input terminal Y1 of amplifier A1 but with a DC voltage applied to Y13 the voltage at input terminal Y9 is equal to VR, whereas when an input signal is present at the input terminal Y1 the voltage at input terminal Y9 tends to become equal to VR − VD due to the regulating action of the circuit. Hence the voltage variation produced on input terminal Y9 due to the presence of an input signal is substantially equal to VD and is therefore independent of the supply voltage V+, V− although the latter can vary between relatively large limits. When no input signal is applied to Y9 the voltage on the base of transistor T40 is equal to VR and therefore larger than the voltage of the base of transistor T39 which is at VR − VD so that transistor T40 is then conductive, whereas transistor T39 is blocked. As a consequence the base of transistor T43 is then at a higher potential than the base of transistor T44 so that transistor pair T41, T43 is conductive whereas transistor pair T42, T44 is blocked. Thus all the current flowing through current mirror transistor T38 only flows through transistor T41, T43 and no DC current flows through the diodes d19, d20, which have therefore a high resistance, in practice about 10 kilo-ohms. From an AC viewpoint a high impedance is hence connected between the junction point of resistor R8 and DC blocking capacitor C8 and V+ which is at ground potential from an AC viewpoint. On the contrary, when an input signal is applied to Y9 the voltage at the base of transistor T40 decreases toward VR − VD and therefore transistor T40 becomes less conductive, whereas transistor T39 becomes more conductive so that the resistance of the diodes d19 and d20 decreases towards a minimum equal to 26 ohms (from a DC viewpoint). However from an AC viewpoint the minimum AC impedance to ground between the above mentioned junction point of R28 and C8 becomes equal to about 13 ohms.

Due to a potentiometer being formed by the diode AC impedance and resistor R8 the AGCC is able to perform a regulating function over a large range. More specifically, it is able to maintain the voltage level at the input terminal Y1 of amplifier A1 equal to about 7 milli-Volts although the input signal applied thereat via capacitor C8 may vary e.g. between 7 milli-Volts and 2.1 Volts i.e. of a factor 300.

The ringing oscillator/switching circuit ROSC with input terminals Y7 and Y17 to Y22 includes transistors T45 to T54 and resistors R60 to R75. It is mainly constituted by a comparator which acts as a precision level detector and which is coupled through gating circuitry to a circuit which is able to operate either as a switch in the ETU or as an oscillator in the STU. This oscillator is an astable multivibrator of the type disclosed in the book "Pulse, digital and switching waveforms" by Mill- man and Taub, International Student Edition, page 448.

The comparator includes transistors T45 and T46, the joined emitters of which are connected to V+ via resistor R60. The collector of T45 is directly connected to V−, whereas the collector of T46 is connected to V− via the collector-to-emitter path of gating transistor T48 shunted by the base bias resistor R61 of transistor T49. The junction point of T48 and R61 is indeed connected to the base of transistor T49 of the Darlington pair T49, T50. The base of transistor T48 is connected to the junction point of the bias resistors R62 and R63 which are connected in series between control input terminal Y19 and V−.

As already mentioned above, Y19 is continuously at V− in the ETU and in the STU it is at V− only when the hookswitch of SS2 has not been hooked off. Otherwise it is at V+. When Y19 is at V− the operation of gating transistor T48 is inhibited and it is enabled when Y19 is at V+. When gating transistor T48 is enabled it prevents the operation of transistor T49.

The bases of transistors T45 and T46 constitute the reference and signal inputs of the comparator respectively. The base of transistor T46 is directly connected to the collector of transistor T39 of the AGCC and the base of transistor T45 is connected to the junction point of resistor R64 and the collector-to-emitter path of transistor T47. The diode d18, resistor R64, the collector-to-emitter path of T47 and resistor R63 are connected between V+ and V− so that due to T47 being a current mirror transistor a reference voltage is established at the base of T45. The junction point of d18 and R64 constitutes input terminal Y17; the base of T46 is input terminal Y18 and the base of T47 constitutes control input terminal Y7.

The circuit which is able to operate as an astable multivibrator comprises transistors T51 and T52, V+ being connected to the joined collector of T51 and base of T52 via resistor R66. The emitters of T51 and T52 are connected to V− via individual emitter resistors R67, R68 and the common collector-to-emitter path of transistor T50. In the STU the emitters of T51 and T52 are interconnected by capacitor C22 and in the ETU they are not connected via such a capacitor. As a result the circuit operates as a switch in the ETU and as a multivibrator in the STU. The transistor T50 forms a Darlington pair with transistor T49 the emitter of which is connected to V− via resistor R69. The base of transistor T51 is connected to the junction point of bias resistors R70, R71 which are connected between V+ and V− in series with T50. V+ is connected to the collector of transistor T52 via resistors R72 and R73 in series and the junction point of these resistors is connected to the base of transistor T53. The emitter-to-collector path of T53 and resistors R74, R75 are connected in series between V+ and V− and the junction point of R73 and R74 is connected to the base of transistor T54 the emitter of which is directly connected to V− and the collector of which constitutes output terminal Y22.

As already mentioned above, in the ETU the ROSC is not able to oscillate due to the absence of a capacitor between its input terminals Y20 and Y21, but its operation is otherwise continuously enabled because its control input terminals Y7 and Y19 are continuously activated and continuously at V− respectively. Due to Y7 being activated, transistor T47 is conductive so that a reference voltage is established at the base of transistor T45 the operation of which is thus enabled. Because Y19 is at V− gating transistor T48 is blocked so that when the demodulator circuit DEMOD does not apply an above mentioned smoothened negatively directed rectified signal to the input terminal Y9 of the comparator T39, T40, transistor T40 is conductive whereas transistor T39 is blocked. Thus transistor T46 is blocked so that no signal is applied to the base of transistor T49 of the pair T49, T50. In this case transistors T49 to T54 remain blocked, whereas transistors T45 and T47 are conductive. The output terminal Y22 remain deactivated. On the contrary, when the DEMOD applies such a negative directed signal to Y9, transistor T39 becomes conductive so that transistors T45 and T47 are both blocked and that T46 becomes conductive for a predetermined input signal applied to Y9. Via its collector resistor R61 a signal is thus applied to the base of transistor T49 of the pair T49, T50. As a consequence both these transistors T49 and T50 become conductive due to which also the transistors T51, T52, T53 and T54 become conductive so that V− is applied to output terminal Y22 to enable the operation of relay REL and the carrier wave oscillator OTC, OC in the ETU.

In the STU the ROSC is able to oscillate due to the presence of capacitor C22 between its input terminals Y20 and Y21, but its operation is only enabled when its control input terminal Y19 is at V− due to hookswitch make contact HS1 being open i.e. as long as the telephone handset in SS2 has not been hooked off. Indeed, only in this case gating transistor T48 is blocked, so that when the demodulator circuit DEMOD applies a smoothened negatively directed pulsed, modulated or not modulated signal to input terminal Y9 of the comparator T39, T40, transistor T39 becomes conductive so that transistors T45 and T47 are both blocked and that transistor T46 also becomes conductive for a predetermined input signal applied to Y9. Via its collector resistor T61 a signal is thus applied to the base of transistor T49 of the pair T49, T50. As a consequence both these transistors T49 and T50 become conductive due to which the astable multivibrator T51, T52 is triggered so that via transistors T53 and T54 the output terminal Y22 is alternately activated and de-activated. This output signal is then amplified via ringing amplifier RA and applied to the MIC. As soon as the hookswitch in SS2 is hooked off control input terminal Y19 is brought at V+ due to which transistor T48 becomes conductive and short-circuits the base of transistor T49 so that the operation of the multivibrator T50, T51 is stopped and that the output terminal Y22 is de-activated.

It should be noted that comparator T45, T46 has been provided in order that the ringer MIC which in the STU is coupled to output Y22 of the ROSC should always be abruptly operated for a same input voltage applied to input terminal Y18. The inputs of this comparator are each connected to the junction point of a resistor R57, R64 and a current source T37, T47 which together with a common diode d18 forms a series circuit connected between V+ and V−. Thus a voltage variation on the supply voltage although having an influence on the current provided by these sources has no effect on the voltage difference on the comparator inputs.

The OR-gating circuit ORC (Fig. 5) has input terminals Y23, Y24 and output terminals Y19 and Y25 and includes transistors T55 to T58 and resistors R76 to R83. In the ETU input terminal Y23 is continuously connected to V− and input terminal Y24 is not used so that both transistors T55 and T56 are conductive whereas transistors T57 and T58 are both blocked. As a consequence output terminal Y25 is connected to V+ via transistor T56 and output terminal Y19 is connected to V− via resistors R82 and R83 in series. In the STU input terminal Y23 is not used and input terminal Y24 is either idle or connected to V− via HS1 so that transistors T55 and T56 are both blocked, whilst transistors T57 and T58 are either both blocked when HS1 is open or both conductive when HS1 is closed. In the latter case output terminal Y25 is connected to V+ via transistor T58 and output terminal Y19 is connected to V− and transistor T57.

The transmitter of ETRU and STRU is now considered.

The transmitter input amplifier circuit A5 with low frequency signal input terminal Y26, control input terminal Y25 and output terminal Y27 includes transistors T59, T60, resistors R84 to R86 and capacitor C24, all interconnected as shown. In ETU and STU the signal input terminal Y26 is connected to V− via variable resistor R4. Moreover, in ETU Y26 is coupled to output terminal X3 of hybrid circuit HYB and in STU it is coupled to MIC via C2 and HS2. Inside ETRU and STRU the signal input terminal Y26 of A5 is connected to the base of transistor T59 via resistor R84 and to output terminal Y27 via oscillation preventing resistor R85. The emitter of transistor T59 is connected to control input terminal Y25 and its collector is connected to V+ via resistor R86, to its base via oscillation preventing capacitor C24 and finally to the base of transistor T60 the collector and emitter of which are connected to V+ and Y27 respectively. The amplification factor of the amplifier A5 is equal to the ratio of R85 and R3 in the ETU and to the ratio of R85 and the microphone resistance of about 200 ohms in the STU.

The oscillator circuit OC (Fig. 5) with input terminals Y32, Y33 and output terminal Y28 includes resistors R87 to R89 and transistor T61 the base of which is connected to the junction point of resistors R87, R88 which are further connected to V+ and Y32 respectively. The collector of T61 is directly connected to V+ and its emitter is connected on the one hand to Y28 and on the other hand via resistor R89 to Y33. As already mentioned previously, Y32 and Y33 are connected to the terminals X8 and X9 of the oscillator tank circuit OTC which together with OC forms the carrier oscillator OTC, OC which is able to generate a 64 kHz carrier wave in the ETU and a 28 kHz carrier wave in the STU.

The modulator circuit MOD with input terminals Y27, Y28 control input terminals Y25, Y29 and output terminal Y30 includes transistors T62 to T67 and resistors R90 to R93, all interconnected as shown. Low frequency signal input terminal Y27 is connected to the base of transistor T62 the emitter of which is connected to Y25 via common biasing resistor R90 and to V— via control input terminal Y29, capacitor C14 and resistor R14 (Figs. 1, 2). The collector of T62 is connected to the joined emitters of transistors T63, T64 which together form a differential amplifier. The collectors of these transistors T63, T64 are connected to V+ directly and via the collector-emitter path of current mirror transistor T65 respectively and their bases are connected to the input terminal Y28 which is connected to the like named oscillator output terminal Y28 and to the emitter of transistor T66 respectively. The latter transistor T66 and R91 to R93 are connected in exactly the same way as the transistor T63 and associated components of the OC so that the bases of the transistors T63 and T64 of the differential amplifier T63, T64 exactly have the same DC bias. The junction point of the collectors of transistors T64 and T65 is connected to the base of transistor T67 the emitter and collector of which are connected to the base of transistor T65 and to Y25 respectively. Transistor T67 serves for making the current through T65 less dependent on the current amplification factor β. Transistor T65 is a current mirror transistor the base of which is connected to output terminal Y30.

The purpose of the modulator circuit MOD which is enabled when Y25 is at V— is to modulate a low frequency speech signal applied to signal input terminal Y26 of amplifier circuit A5 on a 64 kHz or 28 kHz carrier wave generated by the oscillator OC, OTC and applied to input terminal Y28, i.e. to the base of transistor T63.

When such a carrier wave is applied to input terminal Y28 and because this base of transistor T63 is at the same DC potential as the base of transistor T64, the positive half waves of this carrier wave cause a current to flow through transistor T63 whereas the negative half waves thereof cause a current to flow through transistors T64 and T65. For both waves a current however flows through transistor T62 and resistor R90 which is shunted by the series connection of variable transistor R14 and capacitor C14 when Y25 is at V—. This current is modulated by a low frequency speech signal when such a modulating signal is applied to the base of transistor T62. The variable resistor R4 connected to this base via resistor R85 serves for regulating the DC bias on this base and the parallel circuit R90; R14, C14 is used for regulating the modulation depth without affecting the amplitude of the carrier. Indeed, for the carrier the capacitor C14 constitutes a high impedance so that the amplitude of this carrier is substantially only affected by resistor R90, whereas for the modulating low frequency speech signal the capacitor C14 substantially constitutes a short-circuit so that the amplitude of the signal can be regulated by means of R14 which is outside the chip.

The output amplifier circuit A6 (Fig. 5) is a so-called class B complementary output stage of a type similar to amplifier circuit A4 considered above. It has input terminal Y30 and output terminal Y31 and includes transistors T68 to T74, resistors R94 to R97 and diodes d21, d22. The current flowing through transistor T65 is reflected in transistors T69 and T70 and the current then flowing through transistor T68 is reflected in transistor T74 branched in common emitter configuration.

The collector-to-emitter path of NPN transistor T71 and the emitter-to-collector path of PNP substrate transistor T72 are connected in series between V+ and V—. To be noted that because T72 is a substrate transistor its collector is directly connected to V—. The junction point of the emitters of T71, T72 is connected via resistor R94 to output terminal Y31 which is coupled to V— via C17 and L4 and their bases are interconnected by the cross-over eliminating diodes d21 and d22 in series. These diodes are also connected between V+ and V— in series with the collector-to-emitter paths of current mirror transistor T70 and emitter-follower T73 which is driven by common-emitter transistor T74. The collector of transistor T74 is connected to the base of transistor T73 via oscillation preventing resistor R95, to V— via biasing resistor R96 and to the junction point of T71 and T72 via feedback resistor R97. Resistor R97 is a feedback resistor because it is connected between the output of the stage, i.e. the junction point of T71 and T72 and the input of this stage, i.e. the junction point of R95 and R96.

When transistor T65 of the modulator circuit MOD conducts, i.e. for the negative half waves of the carrier wave applied to it, also transistors T68, T69, T70, T73, T74 are conductive, the base current for transistor T73 being provided via T70, the base-to-emitter junction of T71 and resistors R97, R96. When a negative half wave applied to the base of transistor T65 goes negative, the current flowing therein increases so that the voltage at the base of T75 goes negative and the voltage at the base of T73 goes positive. As a consequence the base of transistor T72 goes negative, drawing current from the load connected to the junction point of T71 and T72. On the contrary, when a negative half wave applied to the base of transistor T65 goes positive the voltage at the base of transistor T71 goes positive delivering current to the load.

Because of the use of the current mirror transistors T65, T68 to T70 and T74 with T74 providing a current equal to twice that of the other transistors, one may consider that the junction point of the resistors R95 and R96 is connected to a voltage source one end of which is connected to V− (when Y27 is at V−) via a resistor equal to

$$\frac{R90}{2}.$$

Moreover the amplification provided by transistor T73 is substantially infinite due to the fact that its collector resistance is substantially infinite (current mirror), whereas its emitter resistance is substantially zero. Hence the amplification provided by the amplifier circuit A5 is substantially equal to

$$\frac{2R97}{R90}.$$

As described above, the modulator circuit MOD and the amplifier circuit A6 are intercoupled via interconnected current source transistors T65, T68, T69, T70, T74 providing proportional current so that one simultaneously has a DC coupling between MOD and A6 and makes use of a non critical current control which is indeed insensitive to variations in the supply voltage due to the current source transistors being interconnected. A DC interconnection with current control is advantageous over a DC coupling with voltage control because such a control is critical and also over a capacitive coupling because the latter requires the use of a capacitor which cannot be integrated and which for connection to the chip necessitates the use of two chip terminals.

Due to the use of the current source T65, T68, etc. in the way described above the amplifier circuit A6 is only switched-on when the modulator circuit MOD is operative so that only in this case both the MOD and the A6 consume power and that no other circuitry comparable to ORC which controls the connection of V− is required to switch amplifier circuit A6 on. This would be difficult especially for transistor T72 as the latter is a substrate transistor the collector of which is always connected to V−.

As already mentioned above, filter capacitor C18 is used to filter out frequencies able to produce audible intermodulation products in the DEMOD. Another source of interference of harmonics of the 28 kHz and 64 kHz carrier frequencies are the substrate PNP transistors T32 and T72 which are normally electrically coupled via the substrate of the chip. To obviate this influence a large isolation pocket (not shown) is provided on this chip between the receiver and transmitter circuits thereof. Finally to prevent mutual influence of these transmitter and receiver circuits via the common voltage supply chip terminal 20, these circuits are connected to chip terminal 20 via separate leads 20' and 20" the resistance of which attenuates any spurious signal flowing from one circuit to the other.

## Claims

1. Telecommunication system including a telecommunication exchange coupled to each of a plurality of subscriber stations (SS1, SS2) via the cascade connection of an exchange terminal unit (ETU), a transmission link (L) and a subscriber terminal unit (STU), each of said units including a transmitter circuit and a receiver circuit (ETRU, STRU) enabling the units to communicate by modulation and demodulation of a carrier wave, parts of said transmitter and receiver circuits of each of said units being realized as an integrated semiconductor circuit and the integrated parts of said units being identical, characterized in that said transmitter and receiver integrated parts of each of said units are integrated on a same chip, said receiver integrated part (A1, A2, DEMOD, A3, A4, AGCC, ROSC) including a continuously enabled carrier recovery device (A1, A2) having an input (Y1) constituting the receiver input and an output (Y6) which in said subscriber terminal unit (STU) is coupled to a carrier wave detector (CWD) located outside said chip and enabling the operation of said receiver integrated part, except said carrier recovery circuit thereof, only when a carrier wave is being detected by said detector (CWD).

2. Telecommunication system according to claim 1, characterized in that said receiver integrated part further has a control input (Y13) which in said subscriber terminal unit (STU) is coupled to an output (X24) of said carrier wave detector (CWD) and is activated (V+) when a carrier wave is being detected and which in said exchange terminal unit (ETU) is continuously activated (V+).

3. Telecommunication system according to claim 1, characterized in that said receiver integrated part includes said carrier recovery device (A1, A2), a demodulator circuit (DEMOD), a first amplifier circuit (A3) forming part of an active filter circuit (A3, FIC), an output second amplifier circuit (A4), an AGC circuit (AGCC), a ringing oscillator/switching circuit (ROSC) and a switching circuit (SC), said demodulator circuit (DEMOD) having inputs (Y3—Y6) coupled to outputs (Y3—Y6) of said carrier recovery device (A1, A2) and having outputs (Y8, Y9) of which a first one (Y8) is coupled to the output (Y14) of the receiver circuit via the cascade connection of said active filter circuit (A3, FIC) and said second amplifier circuit (A4) and of which a second output (Y9) is coupled to said receiver input (Y1) via said AGC circuit (AGCC) and to said ringing oscillator/switching circuit (ROSC) which is able to operate as a ringing oscillator in said subscriber terminal unit (STU) and as a switching circuit in said exchange terminal unit (ETU) and that said switching circuit (SC) has said control input (Y13) and a control output (Y7) which is connected to control inputs (Y7) of said demodulator circuit (DEMOD), said first (A3) and second (A4) amplifier circuits, said AGC circuit (AGCC) and said ringing oscillator/switching circuit (ROSC).

4. Telecommunication system according to claim 3, characterized in that only in the interconnection of said first (A3) and second (A4) amplifier circuits use is made of a first capacitor (C13) mounted outside said chip.

5. Telecommunication system according to claim 3, characterized in that said transmitter integrated part includes the cascade connection of an input third amplifier circuit (A5) and a modulator device (MOD, A6), and further includes part (OC) of a carrier wave oscillator (OTC, OC) another part (OTC) of which is located outside said chip and a gating circuit (ORC) which controls said third amplifier circuit (A5), said modulator device (MOD, A6) and said ringing oscillator/switching circuit (ROSC) and which is controlled outside said chip in such a manner that in said exchange terminal unit (STU), said third amplifier circuit (A5), said modulator device (DEMOD, A6) and said ringing oscillator/switching circuit (ROSC) are continuously activated and that in said subscriber terminal unit (ETU) said third amplifier circuit (A5), said modulator device (DEMOD, A6) and said ringing oscillator/switching circuit (ROSC) are enabled or disabled in function of the condition of a hookswitch (HS1) forming part of telecommunication equipment in said subscriber station (SS2).

6. Telecommunication system according to claim 5, characterized in that in said exchange terminal unit (ETU) said ringing oscillator/switching circuit (ROSC) controls said carrier wave oscillator (OTC, OC) and a relay (REL) able to connect said chip of said exchange terminal unit (ETU) to said exchange and that in said subscriber terminal unit (STU) said ringing oscillator/switching circuit (ROSC) controls a ringer (MIC) forming part of telecommunication equipment in said subscriber station (SS2).

7. Telecommunication system according to claim 3, characterized in that said demodulator circuit (DEMOD) is biased by a first current source (T21, T22) and is coupled to said second amplifier circuit (A4) which includes two complementary first (T31) and second (T32) transistors the collector-to-emitter paths of which are connected in series between the poles of a DC supply source (V+, V−) and the bases of which are interconnected via two series connected first diodes (d15, d16) which are further connected in series with a third transistor (T33) in emitter-follower configuration and with the emitter first resistance (R49) of said third transistor (T33) the base of which is coupled to the junction point of a second current source (T29) and a transistor stage (T34, T35) in common emitter configuration and the input of which is coupled to the input (Y12) of said second amplifier circuit (A4), the latter input (Y12) being coupled via a feedback second resistance (R48) to the amplifier output (Y14) constituted by the junction point of said collector-to-emitter paths of said complementary first (T31) and second (T32) transistors, said first (T21, T22) and second (T29) current sources being interconnected so as to provide proportional currents.

8. Telecommunication system according to claim 1, characterized in that said chip is mounted in a package one terminal (20) of which is connected outside said chip to one pole (V−) of a DC source (V+, V−) and on said chip to said receiver and transmitter integrated parts via respective individual leads (20', 20"), that on said chip said receiver and transmitter integrated parts are isolated from each other by an isolation pocket and that each receiver circuit input (Y1) is connected to ground from an AC viewpoint via a filter second capacitor (C18) able to filter out predetermined harmonics of the carrier waves generated by the transmitter circuits of said exchange (ETU) and subscriber (STU) terminal units.

9. Telecommunication system according to claim 3, characterized in that said demodulator circuit (DEMOD) and said carrier wave recovery device (A1, A2) form part of a demodulator device having an input coupled via a fourth amplifier circuit (A1) on the one hand to a first input of said demodulator circuit and on the other hand via a carrier recovery circuit (A2) to a second input of said demodulator circuit (DEMOD) the output of which constitutes the output of the demodulator device, a modulating signal appearing at the demodulator device output when a modulated carrier wave is applied to said demodulator device input, said fourth amplifier circuit and said carrier recovery circuit forming said carrier recovery device, that said demodulator circuit (DEMOD), said fourth amplifier circuit (A1) and said carrier wave recovery circuit (A2) as well as their constituent components are DC coupled and that said carrier wave recovery circuit comprises a fifth amplifier circuit (A2) having an output (Y5, Y6) associated with limiter means (d11—d14) and providing a sufficiently high amplification such that said limiter means derive said carrier wave from said modulated carrier wave, said fourth amplifier circuit (A1) providing an amplification which is much smaller than that provided by said fifth amplifier circuit (A2).

10. Telecommunication system according to claim 9, characterized in that said fourth (A1) and fifth (A2) amplifier circuits are current-source biased differential amplifier circuits having respective third (T8) and fourth (T9) biasing current sources which are intercoupled so as to provide proportional currents and that said limiter means (d11—d14) are connected between the terminals of the differential output (Y5, Y6) of said differential fifth amplifier circuit (A2).

11. Telecommunication system according to claim 10, characterized in that said differential fourth amplifier circuit (A1) includes fourth (T5) and fifth (T6) transistors the emitters of which are intercoupled through said third current source (T8) and the bases of which are intercoupled through a third resistance (R25, R26) a tapping point of which is connected to the emitter of a sixth transistor (T7) branched in emitter follower configuration, the base of said fifth transistor (T6) constituting a signal input (Y1) of said differential fourth amplifier circuit (A1).

**0 066 011**

12. Telecommunication system according to claim 3, characterized in that it includes an automatic gain control device supplied from a DC source and with a signal input which is coupled to a signal output via the cascade connection of a fourth resistance, a third capacitor and a first amplification means, said signal output being coupled to the junction point of said fourth resistance and said third capacitor via the cascade connection of a rectifier circuit and said AGC circuit comprising a differential second amplifier means biased by a fifth current source and having a first input coupled to an output of said rectifier circuit, having a second input and having a branch which includes at least one second diode and which controls a variable impedance forming together with said fourth resistance a potentiometer, and that said first input (Y9) of said differential second amplifier means (T39—T44) is connected to the junction point of a fifth resistance (R35, R9) and a sixth current source (T21) forming part of an output branch of said rectifier circuit (DEMOD) and said second input of said differential second amplifier means being connected to a reference voltage (VR – VD) at a second junction point of a third diode (d17) and a seventh current source (T36), a sixth resistance (R59), said third diode (d17) and said seventh current source (T36) being connected in series, said second diode (d20) forming together with said fourth resistance (R8) said potentiometer and said fifth (T37), sixth (T21) and seventh (T36) current sources being interconnected so as to provide proportional currents.

13. Telecommunication system according to claim 12, characterized in that said differential second amplifier means include a differential sixth amplifier circuit (T39, T40) having first and second individual branches with said first (Y9) and second inputs of said differential second amplifier means (T39—T44) and a first common branch including said fifth current source (T37), and a differential seventh amplifier circuit (T41—T44) having third and fourth individual branches DC coupled to said first and second individual branches and a second common branch including an eighth current source (T38) interconnected with said fifth (T37), sixth (T21) and seventh (T36) current sources so as to provide proportional currents, said first individual branch including said third diode (d20).

14. Telecommunication system according to claim 13, characterized in that said third individual branch of said differential seventh amplifier circuit (T41—T44) includes at least a fourth diode (d19) which is connected in series with said second diode (d20), both said second and fourth diodes being shunted by a fourth capacitor (C16).

15. Telecommunication system according to any of the claims 12 to 14, characterized in that said rectifier circuit is a demodulator circuit forming part of the demodulator device of the telecommunication system defined in any of the claims 9 to 11, and wherein said carrier recovery device constitutes said first amplifier means (A1, A2).

16. Telecommunication system according to claims 5 and 13, characterized in that said ringing oscillator/switching circuit (ROSC) includes a comparator (T45, T46) and a ringing oscillator/switching means (T49—T53), said comparator (T45, T46) having a first input (Y18) coupled with said first individual branch of said differential sixth amplifier circuit (T39, T40), a second input coupled with a reference level and an output coupled together with an output (Y19) of said gating circuit (ORC) to an input of said ringing oscillator/switching means (T49—T53), all in such a manner that when a carrier wave is applied to said differential sixth amplifier circuit (T39, T40) and said gating circuit (ORC) applies an enabling signal to said ringing oscillator/switching means (T49—T53) the latter means are operated upon the amplitude of said carrier wave exceeding said reference level.

17. Telecommunication system according to claim 3, characterized in that said ringing oscillator/switching circuit is operated upon a pulsed carrier wave being received from said exchange terminal unit, via gating means (T48) controlled by a hookswitch (HS1) also forming part of said subscriber station (SS2).

18. Telecommunication system according to claim 16, characterized in that said second input of said comparator circuit (T45, T46) is coupled to the junction point of a resistance (R64) and a ninth current source (T47) which is connected to said fifth (T37), seventh (T36) and eighth (T38) current sources, all providing proportional currents.

19. Telecommunication system according to claim 5, characterized in said modulator circuit (MOD, A6) which is fed from a DC supply source the constituent components are all DC coupled and include a differential eighth amplifier circuit at least with first and second individual branches and a common third branch, said first, second and third branches having first, second and third inputs respectively, said first and second inputs being biased at a same DC voltage and a carrier wave and a modulating signal being applied to said first and third inputs respectively, and that the modulator circuit further includes a sixth amplifier circuit (A6) the constituent components of which are DC coupled and having an input fed from a tenth current source (T68, T74) which is DC coupled with an eleventh current source (T65) included in said second individual branch of said differential eighth amplifier circuit (MOD), said tenth (T68, T74) and eleventh (T65) current sources being interconnected and providing proportional currents.

20. Telecommunication system according to claim 19, characterized in that said sixth amplifier circuit (A6) includes two complementary seventh (T71) and eighth (T72) transistors the collector-to-emitter paths of which are connected in series between the poles of said DC supply source (V+, V−) and the bases of which are interconnected via two series connected fifth diodes (d21, d22) which are further connected in series with a twelfth current source (T70), DC connected to said eleventh current source (T65) so as to provide a proportional current, and to a ninth transistor (T73) in common emitter configuration and the base of which is coupled to said input of said sixth amplifier circuit (A6) and via a feedback eighth resistance (R97) to the junction point of said collector-to-emitter paths of said complementary seventh (T71) and eighth (T72) transistors.

21. Telecommunication system according to claim 19, characterized in that said common third branch includes an emitter follower tenth transistor (T62) the emitter ninth resistance (R62) of which is shunted by a parallel circuit comprising a first branch constituted by a variable tenth resistance (R4) and a second branch constituted by the series connection of an eleventh resistance (R14) and a fifth capacitor (C14).

22. Telecommunication system according to claims 7, 8 and 21, characterized in that said second (T32) and eighth (T72) transistors are substrate PNP transistors which are isolated from each other by said isolation pocket.

**Patentansprüche**

1. Fernmeldesystem mit einer Fernmeldevermittlungsstelle, die über eine Kaskadenschaltung aus einer amtsseitigen übertragungseinheit (ETU), einem Übertragungsweg (L) und einer teilnehmerseitigen Übertragungseinheit (STU) an jede von mehreren Teilnehmerstationen (SS1, SS2) angeschlossen ist, wobei jede dieser Einheiten eine Sende-Empfangsschaltung (ETRU, STRU) enthält, welche einen Datenverkehr zwischen den Einheiten durch Modulation und Demodulation einer Trägerschwingung ermöglicht, und wobei Teile der Sende-Empfangs-Schaltung jede Einheit als integrierte Halbleiterschaltung realisiert sind und die integrierten Teile der Einheiten den gleichen Schaltungsaufbau aufweisen, dadurch gekennzeichnet, daß die integrierten Teile der Sende-Empfangs-Schaltung jeder Einheit auf demselben Chip integriert sind, wobei der integrierte Empfangsschaltungsteil (A1, A2, DEMOD, A3, A4, AGCC, ROSC) eine ständig aktivierte Trägerrückgewinnungseinrichtung (A1, A2) enthält, die einen den Empfängereingang bildenden Eingang (Y1) und einen Ausgang (Y6) aufweist, der in der teilnehmerseitigen Übertragungseinheit (STU) mit einem außerhalb des Chips angeordneten Trägerschwingungsdetektor (CWD) verbunden ist, welcher den integrierten Empfangsschaltungsteil mit Ausnahme der Trägerrückgewinnungseinrichtung dieses Teils nur dann freigibt, wenn der Detektor (CWD) eine Trägerwelle feststellt.

2. Fernmeldesystem nach Anspruch 1, dadurch gekennzeichnet, daß der integrierte Empfangsschaltungsteil außerdem einen Steuereingang (Y13) aufweist, der in der teilnehmerseitigen Übertragungseinheit (STU) mit einem Ausgang (X24) des Trägerschwingungsdetektors (CWD) verbunden ist und dann aktiviert ist (V+), wenn eine Trägerwelle festgestellt wird, und der in der amtsseitigen Übertragungseinheit (ETU) ständig aktiviert ist (V+).

3. Fernmeldesystem nach Anspruch 1, dadurch gekennzeichnet, daß der integrierte Empfangsschaltungsteil die Trägerrückgewinnungseinrichtung (A1, A2), eine Demodulatorschaltung (DEMOD), eine einen Teil einer aktiven Filterschaltung (A3, FIC) bildende erste Verstärkerschaltung (A3), eine zweite, ausgangsseitige Verstärkerschaltung (A4), eine automatische Verstärkungsreglerschaltung (AGCC), einen Rufgenerator/Schaltkreis (ROSC) und einen Schaltkreis (SC) enthält, wobei die Demodulatorschaltung (DEMOD) an Ausgänge (Y3—Y6) der Trägerrückgewinnungseinrichtung (A1, A2) angeschlossene Eingänge (Y3—Y6) und Ausgänge (Y8, Y9) aufweist, von denen ein erster (Y8) über eine Kaskadenschaltung aus der aktiven Filterschaltung (A3, FIC) und der zweiten Verstärkerschaltung (A4) an den Ausgang (Y14) der Empfangsschaltung angeschlossen ist und von denen ein zweiter Ausgang (Y9) über die automatische Verstärkungsreglerschaltung (AGCC) an den Empfängereingang (Y1) angeschlossen und außerdem an den Rufgenerator/Schaltkreis (ROSC) gekoppelt ist, der in der teilnehmerseitigen Übertragungseinheit (STU) als Rufgenerator und in der amtsseitigen Übertragungseinheit (ETU) als Schaltkreis betreibbar ist, und daß der Schaltkreis (SC) den Steuereingang (Y13) und einen weiteren Steuereingang (Y7) aufweist, der an Steuereingänge (Y7) der Demodulatorschaltung (DEMOD), der ersten (A3) und der zweiten (A4) Verstärkerschaltung, der automatischen Verstärkungsreglerschaltung (AGCC) und des Rufgenerators/ Schaltkreises (ROSC) angeschlossen ist.

4. Fernmeldesystem nach Anspruch 3, dadurch gekennzeichnet, daß nur in der Verbindung zwischen der ersten (A3) und der zweiten (A4) Verstärkerschaltung ein erster, außerhalb des Chips angeordneter Kondensator (C13) verwendet ist.

5. Fernmeldesystem nach Anspruch 3, dadurch gekennzeichnet, daß der integrierte Sendeschaltungsteil eine Kaskadenschaltung aus einer dritten, eingangsseitigen Verstärkerschaltung (A5) und einer Modulatoreinrichtung (MOD, A6), einen Teil (OC) eines Trägerfrequenzerzeugers (OTC, OC), dessen anderer Teil (OTC) außerhalb des Chips angeordnet ist, und eine Torschaltung (ORC) enthält, die die dritte Verstärkerschaltung (A5), die Modulatoreinrichtung (MOD, A6) und den Rufgenerator/Schaltkreis (ROSC) steuert und die außerhalb des Chips so gesteuert wird, daß in der amtsseitigen Übertragungseinheit (ETU) die dritte Verstärkerschaltung (A5), die Modulatoreinrichtung (DEMOD, A6) und der Rufgenerator/ Schaltkreis (ROSC) ständig aktiviert sind, und daß in der teilnehmerseitigen Übertragungseinheit (STU) die dritte Verstärkerschaltung (A5), die Modulatoreinrichtung (DEMOD, A6) und der Rufgenerator/Schaltkreis (ROSC) in Abhängigkeit vom Schaltzustand eines einen Teil der Einrichtungen der Teilnehmerstation (SS2) bildenden Gabelumschalters (HS1) freigegeben oder gesperrt sind.

6. Fernmeldesystem nach Anspruch 5, dadurch gekennzeichnet, daß in der amtsseitigen Übertragungseinheit (ETU) der Rufgenerator/Schaltkreis (ROSC) den Trägerfrequenzerzeuger (OTC, OC) und ein Relais (REL) steuert, durch welches der Chip der amtsseitigen Übertragungseinheit (ETU) mit der Vermittlungsstelle verbindbar ist, und daß in der teilnehmerseitigen Übertragungseinheit (STU) der Rufgenerator/Schaltkreis (ROSC) eine einen Teil der Einrichtungen der Teilnehmerstation (SS2) bildende Rufeinrichtung (MIC) steuert.

7. Fernmeldesystem nach Anspruch 3, dadurch gekennzeichnet, daß die Demodulatorschaltung (DEMOD) über eine erste Stromquelle (T21, T22) voreingestellt wird und mit der zweiten Verstärkerschaltung (A4) gekoppelt ist, die zwei Komplementärtransistoren, nämlich einen ersten (T31) und einen zweiten (T32) Transistor, enthält, deren Kollektor-Emitterstrecken in Reihe zwischen die Pole einer Gleichstromquelle (V+, V−) geschaltet sind und deren Basen über zwei in Reihe geschaltete erste Dioden (d15, d16) miteinander verbunden sind, die außerdem in Reihe mit einem dritten, als Emitterfolger betriebenen Transistor (T33) und dem einen ersten Widerstand (R49) darstellenden Emitterwiderstand des dritten Transistors (T33) liegen, dessen Basis mit dem Verbindungspunkt zwischen einer zweiten Stromquelle (T29) und einer in Emitterschaltung betriebenen Transistorstufe (T34, T35) gekoppelt ist und dessen Eingang an den Eingang (Y12) der zweiten Verstärkerschaltung (A4) angeschlossen ist, der über einen einen zweiten Widerstand (R48) darstellenden Rückkopplungswiderstand mit dem Verstärkerausgang (Y14) verbunden ist, welcher von dem Verbindungspunkt zwischen den Kollektor-Emitter-Strecken des ersten (T31) und des zweiten (T32) Komplementärtransistors gebildet wird, wobei die erste (T21, T22) und die zweite (T29) Stromquelle so zusammengeschaltet sind, daß sie proportionale Ströme liefern.

8. Fernmeldesystem nach Anspruch 1, dadurch gekennzeichnet, daß der Chip in einem Gehäuse untergebracht ist, von dem ein Anschluß (20) über jeweils zugeordnete Verbindungsleitungen (20', 20") außerhalb des Chips mit einem Pol (V−) eine Gleichsspannungsquelle (V+, V−) und auf dem Chip mit den integrierten Teilen der Sende-Empfangs-Schaltung verbunden ist, daß auf dem Chip die integrierten Teile der Sende-Empfangs-Schaltung durch eine Isolierwanne voneinander getrennt sind, und daß der Empfangsschaltungs-Eingang (Y1) über einen einen zweiten Kondensator (C18) darstellenden Siebkondensator wechselstrommäßig an Masse liegt, der vorgegebene Harmonische der von den Sendeschaltungen der amtsseitigen (ETU) und der teilnehmerseitigen (STU) Übertragungseinheit erzeugten Trägerschwingungen ausfiltert.

9. Fernmeldesystem nach Anspruch 3, dadurch gekennzeichnet, daß die Demodulatorschaltung (DEMOD) und die Trägerrückgewinnungseinrichtung (A1, A2) Teile einer Demodulatoreinrichtung sind, die ausgangsseitig einerseits über eine vierte Verstärkerschaltung (A1) an den ersten Eingang der Demodulatorschaltung und andererseits über eine Trägerrückgewinnungsschaltung (A2) an einen zweiten Eingang der Demodulatorschaltung (DEMOD) angeschlossen ist, deren Ausgang den Ausgang der Demodulatoreinrichtung bildet, wobei am Ausgang der Demodulatoreinrichtung ein Modulationssignal erscheint, wenn an den Eingang der Demodulatoreinrichtung eine Trägerschwingung angelegt ist, und wobei die Trägerrückgewinnungseinrichtung von der vierten Verstärkerschaltung und der Trägerrückgewinnungsschaltung gebildet wird, daß die Demodulatorschaltung (DEMOD), die vierte Verstärkerschaltung (A1) und die Trägerrückgewinnungsschaltung (A2) sowie deren Bestandteile direktgekoppelt sind, und daß die Trägerrückgewinnungsschaltung eine fünfte Verstärkerschaltung (A2) mit einem Ausgang (Y5, Y6) enthält, dem Begrenzermittel (d11—d14) zugeordnet sind und der eine genügend hohe Verstärkung liefert, so daß die Begrenzermittel die Trägerschwingung von der modulierten Trägerschwingung ableiten, wobei die Verstärkung der vierten Verstärkerschaltung (A1) wesentlich kleiner als die der fünften Verstärkerschaltung (A2) ist.

10. Fernmeldesystem nach Anspruch 9, dadurch gekennzeichnet, daß die vierte Verstärkerschaltung (A1) und die fünfte Verstärkerschaltung (A2) Differentialverstärkerschaltungen sind, die über eine dritte (T8) bzw. eine vierte (T9) Stromquelle voreingestellt werden, welche so zusammengeschaltet sind, daß sie proportionale Ströme liefern, und daß die Begrenzermittel (d11—d14) zwischen den Anschlüssen des Differenzausgangs (Y5, Y6) der als Differentialverstärkerschaltung ausgelegten fünften Verstärkerschaltung (A2) liegen.

11. Fernmeldesystem nach Anspruch 10, dadurch gekennzeichnet, daß die als Differentialverstärkerschaltung ausgelegte vierte Verstärkerschaltung (A1) einen vierten Transistor (T5) und einen fünften Transistor (T6) enthält, deren Emitter über die dritte Stromquelle (T8) und deren Basen über einen dritten Widerstand (R25, R26) miteinander verbunden sind, dessen Abgreifpunkt am Emitter eines als Emitterfolger betriebenen sechsten Transistors (T7) liegt, wobei die Basis des fünften Transistors (T6) einen Signaleingang (Y1) der als Differentialverstärkerschaltung ausgelegten vierten Verstärkerschaltung (A1) bildet.

12. Fernmeldesystem nach Anspruch 3, dadurch gekennzeichnet, daß daß es eine von einer Gleichstromquelle gespeiste automatische Verstärkungsreglungseinrichtung enthält, die einen Signaleingang aufweist, welcher über eine Kaskadenschaltung aus einem vierten Widerstand, einem dritten Kondensator, und einem ersten Verstärkungsmittel mit einem Signalausgang verbunden ist, der über eine Kaskadenschaltung aus einer Gleichrichterschaltung und der automatischen Verstärkungsreglerschaltung am Verbindungspunkt zwischen dem vierten Widerstand und dem dritten Kondensator liegt, wobei die automatische Verstärkungsreglerschaltung ein über eine fünfte Stromquelle voreingestelltes zweites Differentialverstärkermittel, einen mit dem Ausgang der Gleichrichterschaltung verbundenen ersten Eingang, einen zweiten Eingang und einen Zweig aufweist, welcher mindestens eine zweite Diode enthält und der eine zusammen mit dem vierten Widerstand ein Potentiometer bildende veränderliche Impedanz steuert, daß der erste Eingang (Y9) der zweiten Differentialverstärkermittel (T39—T44) mit dem Verbindungspunkt zwischen einem fünften Widerstand (R35, R9) und einer einen Teil eines Ausgangszweigs der Gleichrichterschaltung (DEMOD) bildenden sechsten Stromquelle (T21) verbunden ist und daß der zweite Eingang der zweiten Differentialverstärkermittel an einer Bezugsspannung (VR − VD) an einem zweiten Verbindungspunkt zwischen einer dritten Diode (d17) und einer siebten Stromquelle (T36) liegt, wobei ein sechster Widerstand (R59), die dritte Diode (d17) und die siebte Stromquelle (T36) in Reihe geschaltet sind und wobei die zweite Diode (d20) zusammen mit dem vierten Widerstand (R8) das Potentiometer bildet, und die fünfte (T37), die sechste (T21) und die siebte (T36) Stromquelle so zusammengeschaltet sind, daß sie proportionale Ströme liefern.

13. Fernmeldesystem nach Anspruch 12, dadurch gekennzeichnet, daß die zweiten Differentialverstärkermittel eine als Differentialverstärkerschaltung ausgelegte sechste Verstärkerschaltung (T39, T40), die einen ersten und einen zweiten individuellen Zweig mit dem ersten Eingang (Y9) und dem zweiten Eingang der zweiten Differentialverstärkermittel (T39—T44) und einen die fünfte Stromquelle (T37) enthaltenden ersten gemeinsamen Zweig aufweist, und eine als Differentialverstärkerschaltung ausgelegte siebte Verstärkerschaltung (T41—T44) enthält, die mit dem ersten und dem zweiten individuellen Zweig direktgekoppelte dritte und vierte individuelle Zweige und einen zweiten gemeinsamen Zweig aufweist, welcher eine achte Stromquelle (T38) enthält, die so mit der fünften (T37), der sechsten (T21) und dier siebten (T36) Stromquelle zusammengeschaltet ist, daß proportionale Ströme erzeugt werden, wobei der erste individuelle Zweig die dritte Diode (d20) enthält.

14. Fernmeldesystem nach Anspruch 13, dadurch gekennzeichnet, daß der dritte individuelle Zweig der als Differentialverstärkerschaltung ausgelegten siebten Verstärkerschaltung (T41—T44) mindestens eine in Reihe mit der zweiten Diode (d20) liegende vierte Diode (d19) enthält, wobei sowohl die zweite Diode als auch die vierte Diode durch einen vierten Kondensator (C16) überbrückt sind.

15. Fernmeldesystem nach einem der Ansprüche 12 bis 14, dadurch gekennzeichnet, daß die Gleichrichterschaltung eine einen Teil der Demodulatoreinrichtung des in einem der Ansprüche 9 bis 12 definierten Fernmeldesystems bildende Demodulatorschaltung ist, und daß die ersten Verstärkermittel (A1, A2) durch die Trägerrückgewinnungseinrichtung gebildet werden.

16. Fernmeldesystem nach den Ansprüchen 5 und 13, dadurch gekennzeichnet, daß der Rufgenerator/Schaltkreis (ROSC) einen Vergleicher (T45, T46) und ein Rufgeneratormittel/Schaltmittel (T49—T53) enthält, wobei der Vergleicher (T45, T46) einen mit dem ersten individuellen Zweig der als Differentialverstärkerschaltung ausgelegten sechsten Verstärkerschaltung (T39, T40) verbundenen ersten Eingang (Y18), einen an einen Bezugspegel angeschlossenen zweiten Eingang und einen Ausgang aufweist, der zusammen mit einem Ausgang (Y19) der Toschaltung (ORC) an einem Eingang der Rufgeneratormittel/Schaltmittel (T49—T53) liegt, so daß, wenn eine Trägerschwingung an die als Differentialverstärkerschaltung ausgelegte sechste Verstärkerschaltung (T39, T40) angelegt ist und die Torschaltung (ORC) den Rufgeneratormitteln/Schaltmitteln (T49—T53) ein Freigabesignal zuführt, die Rufgeneratormittel/Schaltmittel (T49—T53) betätigt werden, sobald die Amplitude der Trägerschwingung den Bezugspegel überschreitet.

17. Fernmeldesystem nach Anspruch 3, dadurch gekennzeichnet, daß der Rufgenerator/Schaltkreis betätigt wird, sobald von der amtsseitigen Übertragungseinheit über von einem Gabelumschalter (HS1) der Teilnehmerstation (SS2) gesteuerte Torschaltungsmittel (T48) eine impulsförmige Trägerschwingung empfangen wird.

18. Fernmeldesystem nach Anspruch 16, dadurch gekennzeichnet, daß der zweite Eingang der Vergleicherschaltung (T45, T46) mit dem Verbindungspunkt zwischen einem Widerstand (R64) und einer neunten Stromquelle (T47) verbunden ist, welche an die fünfte (T37), die siebte (T36) und die achte (T38) Stromquelle angeschlossen ist, die alle proportionale Ströme liefern.

19. Fernmeldesystem nach Anspruch 5, dadurch gekennzeichnet, daß in der von einer Gleichspannungsquelle gespeisten Modulatorschaltung (MOD, A6) die Bauteile alle direktgekoppelt sind und eine als Differentialverstärkerschaltung ausgelegte achte Verstärkerschaltung mit mindestens einem ersten und einem zweiten individuellen Zweig und einem gemeinsamen dritten Zweig umfassen, wobei der erste, der zweite und der dritte Zweig einen ersten, einen zweiten bzw. einen dritten Eingang aufweisen, wobei der erste und der zweite Eingang mit derselben Gleichspannung vorgespannt sind und wobei dem ersten und dem dritten Eingang eine Trägerschwingung bzw. ein Modulationssignal zugeführt sind, und daß die Modulatorschaltung außerdem eine sechste Verstärkerschaltung (A6) enthält, deren Bauelemente direktgekoppelt sind und die einen Eingang aufweist, welcher von einer zehnten Stromquelle (T68, T74) gespeist wird, die mit einer im zweiten individuellen Zweig der als Differentialverstärkerschaltung ausgelegten achten Verstärkerschaltung (MOD) enthaltenen elften Stromquelle (T65) direktgekoppelt ist, wobei die zehnten (T68, T74) und die elfte (T65) Stromquelle miteinander verbunden sind und proportionale Ströme liefern.

20. Fernmeldesystem nach Anspruch 19, dadurch gekennzeichnet, daß die sechste Verstärkerschaltung (A6) einen siebten (T71) und einen achten (T72) Transistor in Form von Komplementärtransistoren enthält, deren Kollektor-Emitter-Strecken in Reihe zwischen die Pole der Gleichspannungsquelle (V+, V−) geschaltet sind und deren Basen über zwei in Reihe liegende fünfte Dioden (d21, d22) miteinander verbunden sind, die außerdem in Reihe mit einer zwölften Stromquelle (T70) liegen, die zur Lieferung eines proportionalen Stroms mit der elften Stromquelle (T65) galvanisch verbunden ist und außerdem an einen in Emitterschaltung betriebenen neunten Transistor (T73) angeschlossen ist, dessen Basis mit dem Eingang der sechsten Verstärkerschaltung (A6) und über einen achten Widerstand (R97) in Form eines Rückkopplungswiderstandes mit dem Verbindungspunkt zwischen den Kollektor-Emitter-Strecken des siebten (T71) und des achten (T72) Transistors verbunden ist.

21. Fernmeldesystem nach Anspruch 19, dadurch gekennzeichnet, daß der gemeinsame dritte Zweig einen als Emitterfolger betriebenen zehnten Transistor (T62) enthält, dessen einen neunten Widerstand (R62) darstellender Emitterwiderstand durch eine Parallelschaltung überbrückt ist, welche einen durch einen veränderlichen zehnten Widerstand (R4) gebildeten ersten Zweig und einen durch eine Reihenschaltung aus einem elften Widerstand (R14) und einem fünften Kondensator (C14) gebildeten zweiten Zweig aufweist.

22. Fernmeldesystem nach den Ansprüchen 7, 8 und 21, dadurch gekennzeichnet, daß der zweite Transistor (T32) und der achte Transistor (T72) durch die Isolierwanne voneinander getrennte PNP-Transistoren sind.

## Revendications

1. Système de télécommunications comprenant un central de télécommunications couplé à chacun d'une pluralité de postes d'abonnés (SS1, SS2) par la connexion en cascade d'un terminal de central (ETU), une liaison de transmission (L) et un terminal d'abonné (STU), chacun de ces terminaux comprenant un circuit d'émission et un circuit de réception (ETRU, STRU) leur permettant de communiquer par modulation et démodulation d'une onde porteuse, des parties desdits circuits d'émission et de réception de chacune desdites unités étant réalisées sous la forme d'un circuit intégré à semi-conducteurs et les parties intégrées desdits circuits étant identiques, caractérisé en ce que lesdites parties intégrées d'émission et de réception de chacun desdits terminaux sont intégrées sur la même puce, ladite partie réceptrice intégrée (A1, A2, DEMOD, A3, A4, AGCC, ROSC) comprenant un dispositif de rétablissement de porteuse validé en permanence (A1, A2) ayant une entrée (Y1) constituant l'entrée du récepteur et une sortie (Y6) qui, dans ledit terminal d'abonné (STU) est couplée à un détecteur de porteuse (CWD) situé en dehors de ladite puce et ne validant le fonctionnement de ladite partie réceptrice intégrée, à l'exception dudit circuit de rétablissement de la porteuse, que lorsqu'une porteuse est détectée par ledit détecteur (CWD).

2. Système de télécommunications selon la revendication 1, caractérisé en ce que ladite partie de réception intégrée possède en outre une entrée de commande (Y13) qui, dans ledit terminal d'abonné (STU), est couplée à une sortie (X24) dudit détecteur de porteuse (CWD) et est activée (V+) lorsqu'une porteuse est détectée et qui, dans ledit terminal de central (ETU) est activée en permanence (V+).

3. Système de télécommunications selon la revendication 1, caractérisé en ce que ladite partie de réception intégrée comprend ledit dispositif de rétablissement de porteuse (A1, A2), un circuit démodulateur (DEMOD), un premier circuit amplificateur (A3) faisant partie d'un circuit filtrant actif (A3, FIC), un second circuit amplificateur (A4), un circuit de CAG (AGCC), un circuit de commutation/oscillateur de sonnerie (ROSC) et un circuit de commutation (SC), ledit circuit démodulateur (DEMOD) possédant des entrées (Y3—Y6) couplées aux sorties (Y3—Y6) dudit dispositif de rétablissement de porteuse (A1, A2) et possédant des sorties (Y8, Y9) dont la première (Y8) est couplée à la sortie (Y14) du circuit récepteur par l'intermédiaire de la connexion en cascade dudit circuit filtrant actif (A3, FIC) et dudit second circuit amplificateur (A4) et dont la seconde sortie (Y9) est couplée à ladite entrée du récepteur (Y1) par l'intermédiaire dudit circuit de CAG (AGCC) et audit circuit de commutation/oscillateur de sonnerie (ROSC), pouvant fonctionner en oscillateur de sonnerie dans ledit terminal d'abonné (STU) et en circuit de commutation dans ledit terminal de central (ETU), et en ce que ledit circuit de commutation (SC) possède ladite entrée de commande (Y13) et une sortie de commande (Y7), laquelle est connectée aux entrées de commande (Y7) dudit circuit démodulateur (DEMOD), desdits premier (A3) et second (A4) circuits amplificateurs, dudit circuit de CAG (AGCC) et dudit circuit de commutation/oscillateur de sonnerie (ROSC).

4. Système de télécommunications selon la revendication 3, caractérisé en ce que l'on n'utilise un premier condensateur (C13) monté à l'extérieur de la puce que dans l'interconnexion desdits premier (A3) et second (A4) circuits amplificateurs.

5. Système de télécommunications selon la revendication 3, caractérisé en ce que en ce que ladite partie d'émission intégrée comprend la connexion en cascade d'un troisième circuit amplificateur d'entrée (A5) et un dispositif modulateur (MOD, A6) et comprend en outre la partie (OC) d'un oscillateur de porteuse (OTC, OC) dont l'autre partie est située en dehors de la puce et une porte (ORC) qui commande ledit troisième circuit amplificateur (A5), ledit dispositif modulateur (MOD, A6) et ledit circuit de commutation/oscillateur de sonnerie (ROSC) et qui est commandé en dehors de la puce, de telle manière que dans ledit terminal de central (ETU), ledit troisième circuit amplificateur (A5), ledit dispositif modulateur (MOD, A6) et ledit circuit de commutation/oscillateur de sonnerie (ROSC) sont continuellement activés et que, dans ledit terminal d'abonné (STU), ledit troisième circuit amplificateur (A5), ledit dispositif modulateur (MOD, A6) et ledit circuit de commutation/oscillateur de sonnerie (ROSC) sont validés ou invalidés en fonction de l'état d'un crochet commutateur (HS1) formant partie de l'équipement de télécommunications dudit poste d'abonné (SS2).

6. Système de télécommunications selon la revendication 5, caractérisé en ce que, dans ledit terminal de central (ETU), ledit' circuit de commutation/oscillateur de sonnerie (ROSC) commande ledit oscillateur de porteuse (OTC, OC) et un relais (REL) pouvant connecter ladite puce dudit terminal de central (ETU) audit central et en ce que, dans ledit terminal d'abonné (STU), ledit circuit de commutation/oscillateur de sonnerie (ROSC) commande une sonnerie (MIC) formant partie de l'équipement de télécommunication dudit poste d'abonné (SS2).

7. Système de télécommunications selon la revendication 3, caractérisé en ce que ledit circuit démodulateur (DEMOD) est polarisé par une première source de courant (T21, T22) et est couplé audit second circuit amplificateur (A4) qui comprend deux transistors complémentaires, un premier (T31) et un second (T32) dont les voies collecteur-émetteur sont reliées en série entre les pôles d'une source d'alimentation en courant continu (V+, V−) et dont les bases sont interconnectées par deux premières diodes en série (d15, d16) qui sont également connectées en série avec un troisième transistor (T33) monté en émetteur suiveur et la première résistance d'émetteur (R49) dudit troisième transistor (T33) dont la base est couplée au point de jonction d'une seconde source de courant (T29) et d'un étage de transistors (T34, T35) montés en émetteur commun et dont l'entrée est couplée à l'entrée (Y12) dudit second circuit amplificateur (A4), cette dernière entrée (Y12) étant couplée par une seconde résistance de réaction (R48) à l'entrée de l'amplificateur (Y14) constituée par le point de jonction desdites voies collecteur-émetteur desdits premiers (T31) et second (T32) transistors complémentaires, lesdites première (T21, T22) et seconde (T29) sources de courant étant interconnectées de manière à fournir des courants proportionnels.

8. Système de télécommunication selon la revendication 1, caractérisé en ce que ladite puce est montée dans un boîtier dont l'une des bornes (20) est reliée en dehors de ladite puce à l'un des pôles (V−) d'une source de courant continu (V+, V−) et sur ladite puce auxdites parties d'émission et de réception intégrées par l'intermédiaire de conducteurs individuels respectifs (20', 20''), en ce que, sur ladite puce, lesdites parties d'émission et de réception intégrées sont isolées l'une de l'autre par une cuvette isolante et en ce que chaque entrée du circuit récepteur (Y1) est reliée à la terre du point de vue de courant alternatif par l'intermédiaire d'un second condensateur de filtrage (C18) capable d'éliminer des harmoniques prédéterminées des porteuses engendrées par les circuits d'émission desdits terminaux de central (ETU) et d'abonné (STU).

9. Système de télécommunications selon la revendication 3, caractérisé en ce que ledit circuit démodulateur (DEMOD) et ledit dispositif de rétablissement de porteuse (A1, A2) forment partie d'un dispositif démodulateur possédant une entrée couplée par l'intermédiaire d'un quatrième circuit amplificateur (A1), d'une part, à une première entrée dudit circuit démodulateur et, d'autre part, par l'intermédiaire d'un circuit de rétablissement de porteuse (A2) à une seconde entrée dudit circuit démodulateur (DEMOD) dont la sortie constitue la sortie du dispositif démodulateur, un signal de modulation apparaissant à la sortie du dispositif de démodulation lorsqu'une porteuse modulée est appliquée à ladite entrée du dispositif démodulateur, ledit quatrième circuit amplificateur et ledit circuit de rétablissement de porteuse formant ledit dispositif de rétablissement de porteuse, en ce que ledit circuit démodulateur (DEMOD), ledit quatrième circuit amplificateur (A1) et ledit circuit de rétablissement de porteuse (A2) ainsi que leurs composants constituants sont couplés en courant continu et en ce que ledit circuit de rétablissement de porteuse comprend un cinquième circuit amplificateur (A2) possédant une sortie (Y5, Y6) associée à des moyens limiteurs (d11 à d14) et fournissant une amplification suffisamment élevée pour que lesdits moyens limiteurs dérivent ladite porteuse de ladite porteuse modulée, ledit quatrième circuit amplificateur (A1) fournissant une amplification qui est beaucoup plus faible que celle fournie par ledit cinquième circuit amplificateur (A2).

10. Système de télécommunication selon la revendication 9, caractérisé en ce que lesdits quatrième (A1) et cinquième (A2) circuits amplificateurs sont des circuits amplificateurs différentiels polarisés par une source de courant possédant respectivement une troisième (T8) et une quatrième (T9) source de courant de polarisation qui sont interconnectées de manière à fournir des courants proportionnels et en ce que lesdits moyens limiteurs (d11 à d14) sont connectés entre les bornes de la sortie différentielle (Y5, Y6) dudit cinquième circuit amplificateur différentiel (A2).

11. Système de télécommunications selon la revendication 10, caractérisé en ce que ledit quatrième circuit amplificateur différentiel (A1) comprend des quatrième (T5) et cinquième (T6) transistors dont les émetteurs sont interconnectés par l'intermédiaire de ladite troisième source de courant (T8) et dont les bases sont interconnectées par une troisième résistance (R25, R26) dont le point de jonction est connecté à l'émetteur d'un sixième transistor (T7) monté en émetteur suiveur, la base dudit cinquième transistor (T6) constituant l'entrée du signal (Y1) dudit quatrième circuit amplificateur différentiel (A1).

12. Système de télécommunications selon la revendication 3, caractérisé en ce qu'il comprend un dispositif de commande automatique du gain alimenté par une source de courant continu et avec une entrée de signal couplée à une sortie de signal par l'intermédiaire de la connexion en cascade d'une quatrième résistance, d'un troisième condensateur et d'un premier dispositif amplificateur, ladite sortie de signal étant couplée au point de jonction de ladite quatrième résistance et dudit troisième condensateur par l'intermédiaire de la connexion en cascade d'un circuit redresseur et ledit circuit de CAG comprenant un second dispositif amplificateur différentiel polarisé par une cinquième source de courant et ayant une première entrée couplée à la sortie dudit circuit redresseur, ayant une seconde entrée et ayant une branche qui comprend au moins une seconde diodes et qui commande une impédance variable formant avec ladite quatrième résistance un potentiomètre, et en ce que la première entrée (Y9) dudit second dispositif amplificateur différentiel (T39 à T44) est connectée au point de jonction d'une cinquième résistance (R35, R9) et d'une sixième source de courant (T21) formant partie d'une branche de sortie dudit circuit redresseur (DEMOD) et ladite seconde entrée dudit second dispositif amplificateur différentiel étant connectée à une tension de référence (VR − VD) à un second point de jonction d'une troisième diode (d17) et d'une septième source de courant (T36), une sixième résistance (R59), ladite troisième diode (d17) et ladite septième source de courant (T36) étant montées en série, ladite seconde diode (d20) formant avec ladite quatrième résistance (R8) ledit potentiomètre et lesdites cinquième (T37), sixième (T21) et septième (T36) sources de courant étant interconnectées de manière à fournir des courants proportionnels.

13. Système de télécommunications selon la revendication 12, caractérisé en ce que ledit second dispositif amplificateur différentiel comprend un sixième circuit amplificateur différentiel (T39, T40) ayant une première et une seconde branches individuelles avec lesdites première (Y9) et seconde entrées dudit second dispositif amplificateur différentiel (T39 à T44) et une première branche commune comprenant ladite cinquième source de courant (T37) et un septième circuit amplificateur différentiel (T41 à T44) ayant des troisième et quatrième branches individuelles couplées en continu auxdites première et seconde branches individuelles et une seconde branche commune comprenant une huitième source de courant (T38) interconnectée avec lesdites cinquième (T37), sixième (T21) et septième (T36) sources de courant de manière à fournir des courants proportionnels, ladite première branche individuelle comprenant ladite troisième diode (d20).

14. Système de télécommunications selon la revendication 13, caractérisé en ce que ladite troisième branche individuelle dudit septième circuit amplificateur différentiel (T41 à T44) comprend au moins une quatrième diode (d19) qui est connectée en série avec ladite seconde diode (d20), lesdites seconde et quatrième diodes étant toutes deux shuntées par un quatrième condensateur (C16).

15. Système de télécommunications selon l'une quelconque des revendications 12 à 14, caractérisé en ce que ledit circuit redresseur est un circuit démodulateur formant partie du dispositif démodulateur du système de télécommunications défini dans l'une quelconque des revendications 9 à 11 et où ledit dispositif de rétablissement de la porteuse constitue ledit premier dispositif amplificateur (A1, A2).

16. Système de télécommunications selon les revendications 5 et 13, caractérisé en ce que ledit circuit de commutation/oscillateur de sonnerie (ROSC) comprend un comparateur (T45, T46) et un dispositif de commutation/oscillateur de sonnerie (T49 à T53), ledit comparateur (T45, T46) ayant une première entrée (Y18) couplée à ladite première branche individuelle dudit sixième circuit amplificateur différentiel (T39, T40), une seconde entrée couplée à un niveau de référence et une sortie couplée, avec une sortie (Y19) de ladite porte (ORC), à une entrée dudit dispositif de commutation/oscillateur de sonnerie (T49 à T53), le tout de manière à ce que, lorsqu'une porteuse est appliquée audit sixième circuit amplificateur différentiel (T39, T40) et que ladite porte (ORC) applique un signal de validation audit dispositif de commutation/oscillateur de sonnerie (T49 à T53), ce dernier dispositif fonctionne si l'amplitude de ladite porteuse dépasse ledit niveau de référence.

17. Système de télécommunications selon la revendication 3, caractérisé en ce que ledit circuit de commutation/oscillateur de sonnerie fonctionne en réponse à une porteuse pulsée reçue dudit terminal de central par l'intermédiaire d'un dispositif de porte (T48) commandé par un crochet commutateur (HS1) formant également partie dudit poste d'abonné (SS2).

18. Système de télécommunications selon la revendication 16, caractérisé en ce que ladite seconde entrée dudit circuit comparateur (T45, T46) est couplée au point de jonction d'une résistance (R64) et d'une neuvième source de courant (T47) qui est connectée auxdites cinquième (T37), septième (T36) et huitième (T38) sources de courant, toutes fournissant des courants proportionnels.

19. Système de télécommunications selon la revendication 5, caractérisé en ce que ledit circuit modulateur (MOD, A6) qui est alimenté par une source continue dont tous les composants constituants sont couplés en continu et comprennent un huitième circuit amplificateur différentiel possédant au moins une première et une seconde branches individuelles et une troisième branche commune, lesdites première, seconde et troisième branches ayant respectivement une première, une seconde et une troisième entrées, lesdites première et seconde entrées étant polarisées par la même tension continue et une porteuse et un signal de modulation étant appliqués à ladite première et troisième entrées respectivement, et en ce que le circuit modulateur comprend également un sixième circuit amplificateur (A6) dont les composants constituants sont couplés en continu et ayant une entrée alimentée par une dixième source de courant (T68, T74) qui est couplée en continu avec une onzième source de courant (T65) comprise dans ladite seconde branche individuelle dudit huitième circuit amplificateur différentiel (MOD), lesdites dixième (T68, T74) et onzième (T65) sources de courant étant interconnectées et fournissant des courants proportionnels.

20. Système de télécommunications selon la revendication 19, caractérisé en ce que ledit sixième circuit amplificateur (A6) comprend deux septième (T71) et huitième (T72) transistors complémentaires dont les voies collecteur-émetteur sont montées en série entre les pôles de ladite source de courant continu (V+, V−) et dont les bases sont interconnectées par deux cinquièmes diodes (d21, d22) en série qui sont également montées en série avec une douzième source de courant (T70) couplée en continu à ladite onzième source de courant (T65) de manière à fournir un courant proportionnel, et à un neuvième transistor (T73) monté en émetteur commun dont la base est couplée à ladite entrée dudit sixième circuit amplificateur (A6) et par l'intermédiaire une huitième résistance de réaction (R97) au point de jonction desdites voies collecteur-émetteur desdits septième (T71) et huitième (T72) transistors complémentaires.

21. Système de télécommunications selon la revendication 19, caractérisé en ce que ladite troisième branche commune comprend un dixième transistor émetteur suiveur (T62) dont la neuvième résistance d'émetteur (R62) est shuntée par le circuit parallèle composé d'une première branche constituée par une dixième résistance variable (R4) et d'une seconde branche composée du montage en série d'une onzième résistance (R14) et d'un cinquième condensateur (C14).

22. Système de télécommunications selon les revendications 7, 8 et 21, caractérisé en ce que lesdits second (T32) et huitième (T72) transistors sont des transistors de substrat pnp qui sont isolés l'un de l'autre par ladite cuvette d'isolation.

# FIG.1

FIG.2

FIG. 3

FIG. 4

0 066 011

FIG.5